# EUROPEAN PATENT SPECIFICATION

(11) **EP 1 585 034 B1**
(45) Date of publication and mention of the grant of the patent: **22.02.2017**
(21) Application number: 05007309.7
(22) Date of filing: 04.04.2005
(51) Int. Cl.: G06F 17/30

(54) **Memory mapping control apparatus, information storage controller, data moving method, and data moving program**
Abbildsteuerungsvorrichtung für einen Speicher, Informationsspeicherungssteuerungsgerät, Verfahren und Programm zum Bewegen von Daten
Appareil de contrôle de mise en correspondance pour une mémoire, contrôleur de stockage d'information, procédé et logiciel pour déplacer des données

(30) Priority: 06.04.2004 JP 2004112470
(43) Date of publication of application: 12.10.2005
(73) Proprietor: NTT DoCoMo, Inc., Tokyo 100-6150 (JP)
(72) Inventor: Uchida, Motoyuki, -cho 2-chome Chiyoda-ku Tokyo 100-6150 (JP)
(74) Representative: Viering, Jentschura & Partner mbB Patent- und Rechtsanwälte

(56) References cited:
- US-A- 5 564 113
- US-A- 5 909 570
- US-A- 6 009 428
- US-B1- 6 665 677

## Description

### BACKGROUND OF THE INVENTION

### Field of the Invention

The present invention relates to memory mapping control apparatus used for moving data between various information storage controllers such as cell phones, an information storage controller, a data moving method, and a data moving program.

### Related Background Art

There are conventional means provided for backup of user data in a cell phone to an external data storage device (e.g., a personal computer (hereinafter referred to as "PC") or the like) or for copying the user data into another cell phone (the processes such as the backup of data and the copying of data will be generally referred to as "data movement"). A variety of techniques have been proposed heretofore as technologies about such data movement (cf. Japanese Patent Application Laid-Open No. 2004-13454).

In the data movement as described above, concerning the user data such as still images of photos taken by a camera of the cell phone or address book data prepared by the owner of the cell phone, an ordinary procedure of movement thereof is to move the data piece by piece from a source to a destination (i.e., one piece of data at a time in terms of contents).

The document US5564113 discloses a method to move database objects between two relational databases. It does not disclose however, to take into account information about the memory allocation of the source and destination databases.

### SUMMARY OF THE INVENTION

However, the ordinary data moving method as described above required the source cell phone or the destination device (e.g., PC or another cell phone) to perform a process of individually selecting data to be moved, and thus imparted a heavy processing load on the user.

The ordinary cell phones allow such user setting as to execute a specific operation (e.g., ringing of a specific ringtone, a display output of a specific image, or the like) for an incoming call from an originator registered in the address book, and it is sometimes difficult to move such arbitrary user setting information. In such cases, the address book data, ringtone data, still image data, etc. were individually moved to a destination cell phone and thereafter the user had to again perform the user setting process about the specific operation as described above in the destination cell phone, which imparted a heavy processing load on the user.

The problem about the data movement as described above can arise in various devices capable of storing information, including portable personal computers, besides the cell phones.

The present invention has been accomplished in order to solve the above problem and an object of the invention is to provide a memory mapping control apparatus, an information storage controller, a data moving method, and a data moving program capable of improving user's convenience by reducing the load on the user in data movement.

In order to achieve the above object, a memory mapping control apparatus according to the present invention is a memory mapping control apparatus used for moving data stored in a memory of a source information storage controller, to a memory of a destination information storage controller, the memory mapping control apparatus comprising: receiving means for receiving source data stored in the memory of the source information storage controller, in an as-stored format from the source information storage controller, for receiving source structure specifying information for specifying a data structure of the source information storage controller, from the source information storage controller, and for receiving destination structure specifying information for specifying a data structure of the destination information storage controller, from the destination information storage controller; determining means for determining whether a data structure of the source data needs to be transformed, based on the source structure specifying information and the destination structure specifying information received by the receiving means; table acquiring means for, when the determining means determines that the data structure of the source data needs to be transformed, acquiring a data structure transformation table for writing the source data in accordance with the data structure of the destination information storage controller, based on the source structure specifying information and the destination structure specifying information; and transmitting means for transmitting the data structure transformation table acquired by the table acquiring means and the source data, to the destination information storage controller.

In this memory mapping control apparatus, the receiving means receives the source data stored in the memory of the source information storage controller, in the as-stored format from the source information storage controller, and also receives the source structure specifying information for specifying the data structure of the source information storage controller, from the source information storage controller, and the destination structure specifying information for specifying the data structure of the destination information storage controller, from the destination information storage controller. Then the determining means determines whether the data structure of the source data needs to be transformed, based on the received source structure specifying information and destination structure specifying information. The "source structure specifying information" herein may be data structure information describing the data structure of the source information storage controller itself, or information capable of specifying the data structure of the source information storage controller (e.g., version information of a hardware device (memory) of the source information storage controller, or the like). The foregoing version information, besides the version information of the hardware device (memory), may be version information of an OS (operating system), version information of firmware, or the like. The same also applies to the destination structure specifying information. For example, the determining means may be configured to determine whether the data structure of the source data needs to be transformed, based on the version information of the hardware device (memory) of the source information storage controller and the version information of the hardware device (memory) of the destination information storage controller.

When it is determined herein that the data structure of the source data needs to be transformed, the table acquiring means acquires the data structure transformation table (data structure transformation table for writing the source data in accordance with the data structure of the destination information storage controller), based on the source structure specifying information and the destination structure specifying information, and the transmitting means transmits the acquired data structure transformation table and the source data to the destination information storage controller. To "acquire the data structure transformation table" is assumed to include the following two cases: acquisition by receiving the data structure transformation table from another device (e.g., a server or the like); acquisition by preparing the data structure transformation table by itself.

As described above, the data structure transformation table, together with the source data (the source data in the as-stored format in the memory of the source information storage controller herein), can be transmitted to the destination information storage controller even in the case of data movement between information storage controllers with different memory mappings (i.e., in the case where the data structure of the source data needs to be transformed), and thus the destination information storage controller is able to write the source data into the memory in accordance with the data structure of the destination information storage controller, based on the data structure transformation table. This permits the source data to be moved to the destination information storage controller, without need for a special user operation such as selection of data. In addition, since the source data can be moved in the as-stored format in the memory of the source information storage controller, to the destination information storage controller, link relations between data can be maintained, and there is no need for again performing the user setting. In this manner, the user's load can be reduced in the data movement and the user's convenience can be improved. Since the transformation is one between mappings, no transformation of file format is required and the data can be moved to a terminal of different memory allocation by modifying only storage locations of binary data. In other words, a transformation between file formats needs to analyze a certain file format and to prepare data in another file format, but such works are not required in the present invention. For this reason, there is the advantage that the mapping transformation can be implemented even by a CPU with low processing ability.

The table acquiring means may acquire the data structure transformation table by preparing the data structure transformation table on the basis of the source structure specifying information and the destination structure specifying information, or may acquire the data structure transformation table by receiving the data structure transformation table from another device (e.g., a server or the like).

The memory mapping control apparatus according to the present invention is preferably constructed in a configuration further comprising data editing means for editing the source data in accordance with the data structure transformation table, wherein the transmitting means transmits the source data which was edited by the data editing means, as the source data. The "editing" herein refers to modifying allocation in the source data according to the data structure transformation table, which means transforming the source data in accordance with the data structure of the destination information storage controller. By adopting the configuration wherein the data editing means in the memory mapping control apparatus edits the source data in accordance with the data structure transformation table and wherein the source data which was edited is transmitted to the destination information storage controller, the destination information storage controller does not have to perform the editing of the source data according to the data structure transformation table, which can reduce the processing load on the destination information storage controller.

The information storage controller according to the present invention can adopt one of the following two modes (i.e., a first mode in which the information storage controller does not determine whether it is necessary to transform the data structure of the source data, and a second mode in which the information storage controller determines whether the transformation is necessary).

Firstly, an information storage controller according to the present invention is an information storage controller comprising: a memory for storing data; receiving means for receiving source data stored in a memory of a source information storage controller, in an as-stored format and for receiving source structure specifying information for specifying a data structure of the source information storage controller; table acquiring means for acquiring a data structure transformation table for writing the source data in accordance with a data structure of the memory, based on the source structure specifying information received by the receiving means and memory structure specifying information for specifying the data structure of the memory; and writing controlling means for writing the source data into the memory, based on the data structure transformation table acquired by the table acquiring means.

In the above information storage controller, when the receiving means receives the source data in the as-stored format in the memory of the source information storage controller and the source structure specifying information for specifying the data structure of the source information storage controller, the table acquiring means acquires the data structure transformation table for writing the source data in accordance with the data structure of the memory of the host device, based on the received source structure specifying information and the memory structure specifying information for specifying the data structure of the memory of the host device. Then the writing controlling means writes the source data into the memory of the host device, based on the acquired data structure transformation table.

Secondly, another information storage controller according to the present invention is an information storage controller comprising: a memory for storing data; receiving means for receiving source data stored in a memory of a source information storage controller, in an as-stored format and for receiving source structure specifying information for specifying a data structure of the source information storage controller; determining means for determining whether a data structure of the source data needs to be transformed, based on the source structure specifying information received by the receiving means and memory structure specifying information for specifying a data structure of the memory; and writing controlling means for, when the determining means determines that the data structure of the source data needs to be transformed, writing the source data into the memory in accordance with the data structure of the destination information storage controller, based on the source structure specifying information and destination structure specifying information, and for, when the determining means determines that the data structure of the source data does not need to be transformed, writing the received source data into the memory as it is.

In the above information storage controller, when the receiving means receives the source data in the as-stored format in the memory of the source information storage controller and the source structure specifying information for specifying the data structure of the source information storage controller, the determining means determines whether the data structure of the source data needs to be transformed, based on the received source structure specifying information and the memory structure specifying information for specifying the data structure of the memory of the host device.

When it is determined herein that the data structure of the source data needs to be transformed, the writing controlling means writes the source data into the memory in accordance with the data structure of the destination information storage controller, based on the source structure specifying information and the destination structure specifying information. At this time, the writing controlling means may be configured to acquire the data structure transformation table for writing the source data in accordance with the data structure of the destination information storage controller and to write the received source data into the memory of the host device on the basis of the acquired data structure transformation table. When it is determined on the other hand that the data structure of the source data does not need to be transformed, the writing controlling means writes the received source data into the memory of the host device as it is.

The both information storage controllers of the above two modes are able to write the source data (the source data in the as-stored format in the memory of the source information storage controller herein) into the memory in accordance with the data structure of the information storage controller of the host device (destination) even in the case of data movement between information storage controllers with different memory mappings (i.e., in the case where the data structure of the source data needs to be transformed). This makes it feasible to move the source data to the destination information storage controller without need for a special user operation such as selection of data. In addition, the source data in the as-stored format in the memory of the source information storage controller can be moved to the destination information storage controller, whereby link relations between data can be maintained, which eliminates a need for again performing the user setting. In this manner, the user's load can be reduced in data movement and the user's convenience can be improved.

The present invention can also be grasped as the invention concerning the "data moving method" and as the invention concerning the "data moving program" as described below, with like effect.

A data moving method according to the present invention is a data moving method in a memory mapping control apparatus for moving data stored in a memory of a source information storage controller, to a memory of a destination information storage controller, the data moving method comprising: a receiving step of receiving source data stored in the memory of the source information storage controller, in an as-stored format from the source information storage controller, receiving source structure specifying information for specifying a data structure of the source information storage controller, from the source information storage controller, and receiving destination structure specifying information for specifying a data structure of the destination information storage controller, from the destination information storage controller; a determining step of determining whether a data structure of the source data needs to be transformed, based on the source structure specifying information and the destination structure specifying information received in the receiving step; a table acquiring step of, when it is determined in the determining step that the data structure of the source data needs to be transformed, acquiring a data structure transformation table for writing the source data in accordance with the data structure of the destination information storage controller, based on the source structure specifying information and the destination structure specifying information; and a transmitting step of transmitting the data structure transformation table acquired in the table acquiring step and the source data, to the destination information storage controller.

Another data moving method according to the present invention is a data moving method in a destination information storage controller in moving data stored in a memory of a source information storage controller, to a memory of the destination information storage controller, the data moving method comprising: a receiving step of receiving source data stored in the memory of the source information storage controller, in an as-stored format, and receiving source structure specifying information for specifying a data structure of the source information storage controller; a determining step of determining whether a data structure of the source data needs to be transformed, based on the source structure specifying information received in the receiving step and destination structure specifying information for specifying a data structure of the destination information storage controller; a first writing step of, when it is determined in the determining step that the data structure of the source data needs to be transformed, writing the source data into the memory in accordance with the data structure of the destination information storage controller, based on the source structure specifying information and the destination structure specifying information; and a second writing step of, when it is determined in the determining step that the data structure of the source data does not need to be transformed, writing the received source data into the memory as it is.

A data moving program according to the present invention is a data moving program for letting a memory mapping control apparatus, which is used for moving data stored in a memory of a source information storage controller, to a memory of a destination information storage controller, function as: receiving means for receiving source data stored in the memory of the source information storage controller, in an as-stored format from the source information storage controller, for receiving source structure specifying information for specifying a data structure of the source information storage controller, from the source information storage controller, and for receiving destination structure specifying information for specifying a data structure of the destination information storage controller, from the destination information storage controller; determining means for determining whether a data structure of the source data needs to be transformed, based on the source structure specifying information and the destination structure specifying information received by the receiving means; table acquiring means for, when the determining means determines that the data structure of the source data needs to be transformed, acquiring a data structure transformation table for writing the source data in accordance with the data structure of the destination information storage controller, based on the source structure specifying information and the destination structure specifying information; and transmitting means for transmitting the data structure transformation table acquired by the table acquiring means and the source data, to the destination information storage controller.

Another data moving program according to the present invention is a data moving program in moving data stored in a memory of a source information storage controller, to a memory of a destination information storage controller, the data moving program letting the destination information storage controller function as: receiving means for receiving source data stored in the memory of the source information storage controller, in an as-stored format and for receiving source structure specifying information for specifying a data structure of the source information storage controller; determining means for determining whether a data structure of the source data needs to be transformed, based on the source structure specifying information received by the receiving means and memory structure specifying information for specifying a data structure of the memory; and writing controlling means for, when the determining means determines that the data structure of the source data needs to be transformed, writing the source data into the memory in accordance with the data structure of the destination information storage controller, based on the source structure specifying information and destination structure specifying information, and for, when the determining means determines that the data structure of the source data does not need to be transformed, writing the received source data into the memory as it is.

As described above, the destination information storage controller is able to acquire the data structure transformation table together with the source data (the source data in the as-stored format in the memory of the source information storage controller) even in the case of data movement between information storage controllers with different memory mappings, so that the destination information storage controller can write the source data into its memory in accordance with the data structure of the destination information storage controller, based on the data structure transformation table. This makes it feasible to move the source data to the destination information storage controller without need for a special user operation such as selection of data. In addition, since the source data in the as-stored format in the memory of the source information storage controller can be moved to the destination information storage controller, link relations between data can be maintained, and thus there is no need for again performing the user setting. In this manner, the user's load can be reduced in data movement and the user's convenience can be improved. Since the transformation is one between mappings, there is no need for a transformation of the file format and the data can be moved to a terminal of different memory allocation by modifying only storage locations of binary data. In other words, a transformation between file formats requires analyzing a certain file format and preparing data in another file format, but such works are not required in the present invention. For this reason, there is the advantage that the mapping transformation can be implemented even by a CPU with low processing ability.

### BRIEF DESCRIPTION OF THE DRAWINGS

Fig. 1 is a functional block diagram showing a system configuration in the first to fifth embodiments.
Fig. 2 is an illustration showing a data configuration example of internal data of a mobile station.
Fig. 3 is an illustration showing an example of memory mapping information.
Fig. 4 is an illustration showing an example of area information.
Fig. 5 is an illustration showing an example of a memory mapping transformation table.
Fig. 6 is a flowchart showing a data moving process in the first embodiment.
Fig. 7 is a flowchart showing a data moving process in the second embodiment.
Fig. 8 is a flowchart showing a data moving process in the third embodiment.
Fig. 9 is a flowchart showing a data moving process in the fourth embodiment.
Fig. 10 is a flowchart showing a data moving process in the fifth embodiment.
Fig. 11 is a flowchart showing a data moving process in the sixth embodiment.
Fig. 12 is a functional block diagram showing a system configuration in the sixth embodiment.
Fig. 13 is a configuration diagram of a data moving program in a memory mapping control apparatus.
Fig. 14 is a configuration diagram of a data moving program of mobile station B.

### DESCRIPTION OF THE PREFERRED EMBODIMENTS

Various embodiments of the present invention will be described below on the basis of the drawings. The embodiments will be described below using a personal computer (PC) as the memory mapping control apparatus according to the present invention and using mobile stations as the information storage controllers.

Specifically, the following six embodiments will be described in order. The first embodiment is an embodiment wherein in data movement PC determines whether a memory mapping transformation is necessary and when the transformation is necessary, PC prepares a mapping transformation table on the basis of mapping information etc. of mobile stations A, B stored in the PC or in a server and transmits the mapping transformation table thus prepared, together with internal data of a mobile station as a data source (hereinafter referred to as "mobile station A"), to a mobile station as a data destination (hereinafter referred to as "mobile station B"). The second embodiment is an embodiment wherein in data movement PC determines whether a memory mapping transformation is necessary and when the transformation is necessary, PC acquires a mapping transformation table stored in the PC or in a server and transmits the mapping transformation table thus acquired, together with internal data of mobile station A, to mobile station B.

The third embodiment is an embodiment wherein in data movement PC determines whether a memory mapping transformation is necessary and when the transformation is necessary, mobile station B prepares a mapping transformation table on the basis of mapping information of mobile station A obtained from PC or from a server and mapping information of its own (mobile station B) and writes the internal data of mobile station A into a memory on the basis of the prepared mapping transformation table. The fourth embodiment is an embodiment wherein in data movement PC determines whether a memory mapping transformation is necessary and when the transformation is necessary, mobile station B prepares a mapping transformation table on the basis of mapping information of mobile station A acquired from mobile station A and mapping information of its own (mobile station B) and writes the internal data of mobile station A into a memory on the basis of the prepared mapping transformation table.

Furthermore, the fifth embodiment is an embodiment wherein in data movement PC determines whether a memory mapping transformation is necessary and when the transformation is necessary, PC prepares a mapping transformation table on the basis of the mapping information etc. of mobile stations A, B acquired from the mobile stations A, B and transmits the prepared mapping transformation table, together with the internal data of mobile station A, to the mobile station B. The sixth embodiment is an embodiment wherein in data movement mobile station B determines whether a memory mapping transformation is necessary and when the transformation is necessary, the mobile station B prepares a mapping transformation table on the basis of the mapping information of mobile station A acquired from the mobile station A, the mapping information of its own (mobile station B) etc., and writes the internal data of mobile station A into a memory on the basis of the prepared mapping transformation table.

### [First Embodiment]

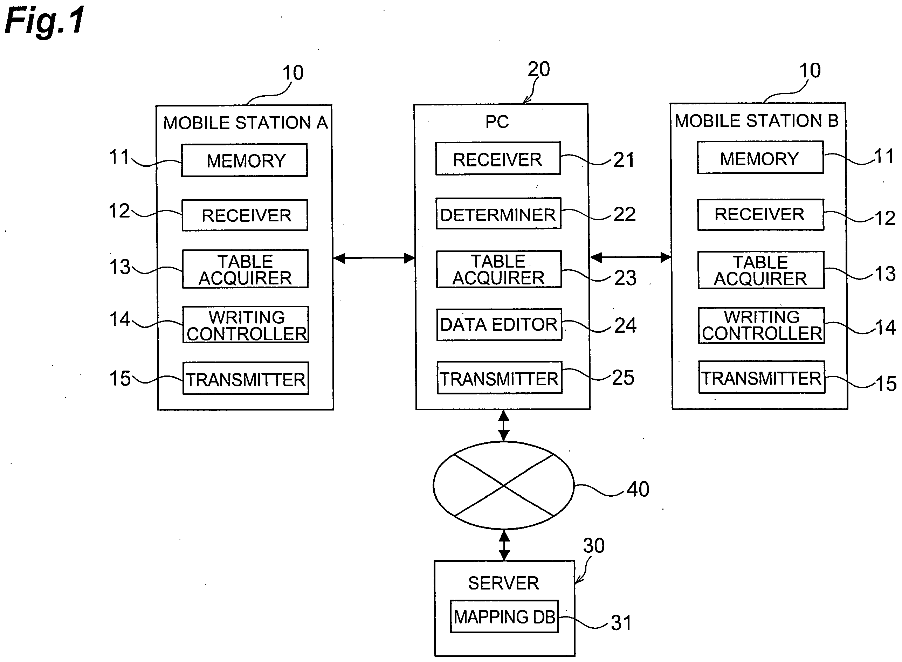

Fig. 1 shows a configuration diagram of a communication system comprised of mobile stations, PC, etc. in the first embodiment. As shown in the same figure, the communication system is constructed including mobile station A as a data source, mobile station B as a data destination, PC 20 as a memory mapping control apparatus, and a server 30 connectible through network 40 with PC 20. This system shows an example in which mobile station A and mobile station B are simultaneously connected to PC 20, but it is noted that the simultaneous connection of mobile station A and mobile station B with PC 20 is not essential. For example, a possible mode is one in which mobile station A transmits the internal data of mobile station A, etc. to PC 20, mobile station B is connected to PC 20 after disconnection of mobile station A from PC 20, and then the mobile station B writes the internal data of mobile station A, etc.

Each mobile station can be a data source at a certain time and a data destination at another time, but the following example will describe a case where the internal data of mobile station A is moved from mobile station A to mobile station B.

Each mobile station 10 is constructed including a configuration associated with mobile telecommunications (not shown), and including a configuration associated with the present invention, which consists of a memory 11 for storing data; a receiver 12 for receiving internal data in an as-stored format in a memory of a source mobile station (hereinafter referred to as "source data"), and for receiving the version information of the source mobile station or the like; a table acquirer 13 for acquiring a table for writing the source data in accordance with the data structure of the memory of the destination mobile station (hereinafter referred to as "data structure transformation table") (i.e., for "acquiring the table by receiving it from PC 20" in the first embodiment); a writing controller 14 for writing the source data into memory 11 on the basis of the acquired data structure transformation table; and a transmitter 15 for transmitting the version information of the host station or the like to PC 20 in the case of the host mobile station being a source mobile station. Since the necessary condition for each mobile station 10 is that it is comprised of the above configuration, the mobile stations may be of the same model of hardware or different models of hardware.

PC 20 is constructed including a configuration associated with the present invention, which consists of a receiver 21 for receiving source data in an as-stored format in a memory of a source mobile station and for receiving the version information of the source mobile station or the like; a determiner 22 for determining whether a data structure of the source data needs to be transformed; a table acquirer 23 for, when it is determined that the data structure of the source data needs to be transformed, acquiring a data structure transformation table (i.e., for "acquiring it by preparing the table" in the first embodiment); a data editor 24 for editing the source data in accordance with the data structure transformation table; and a transmitter 25 for transmitting the data structure transformation table, the source data, etc. to a destination mobile station.

Server 30 is constructed including a mapping DB 31 which stores information necessary on the occasion of movement of source data from the source mobile station A to the destination mobile station B ("mapping information of each of the mobile stations A, B" in the first embodiment). The information necessary on the occasion of movement of source data ("mapping information of each of mobile stations A, B" in the first embodiment) may be stored in a memory (not shown) in PC 20, instead of being stored in server 30.

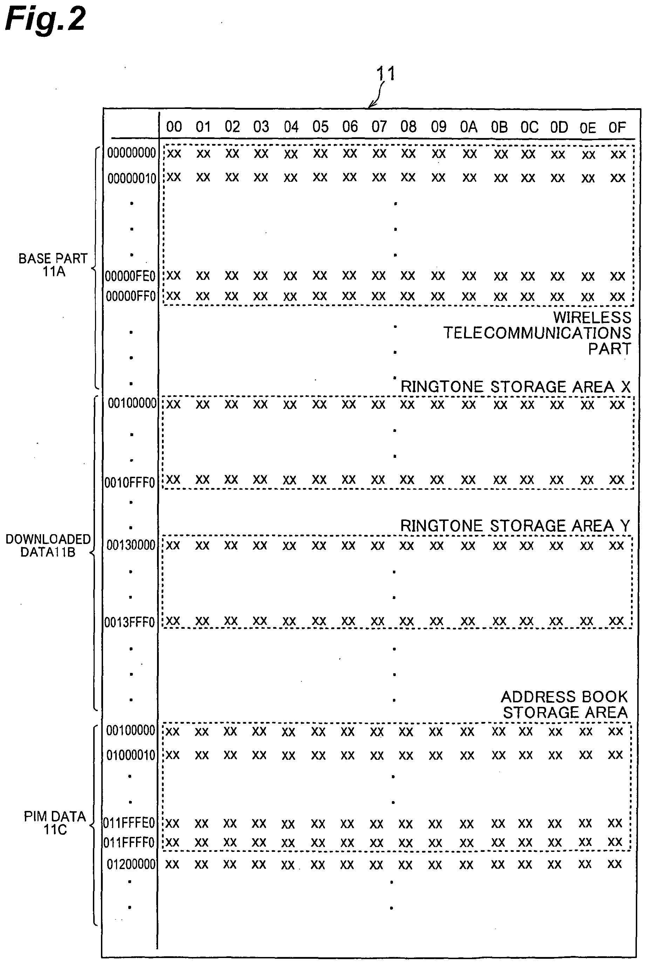

Fig. 2 shows a data configuration example of memory 11 in mobile station 10. The data is composed, for example, of base part 11A storing a wireless communication part, drivers, program necessary for the cell phone function, such as applications, data, etc.; downloaded data 11B transmitted from external devices by downloads or the like of ringtones, images, etc.; Personal Information Manager (PIM) data 11C such as an address book, bookmarks, and mail messages; and various setting information, etc. not shown. The memory allocation may be such that a plurality of inconsecutive memory areas are separately arranged like ringtone storage areas X, Y shown in Fig. 2.

It is assumed below that the source data stored in memory 11 of source mobile station A is outputted in the as-stored format (in other words, the source data in the memory area is outputted as one file), and the data may be outputted as a clear text or as encrypted data. It is, however, needless to mention that, where the source data is outputted as encrypted data from mobile station A, mobile station B needs to decrypt the encrypted data and thereafter write decrypted data into a memory.

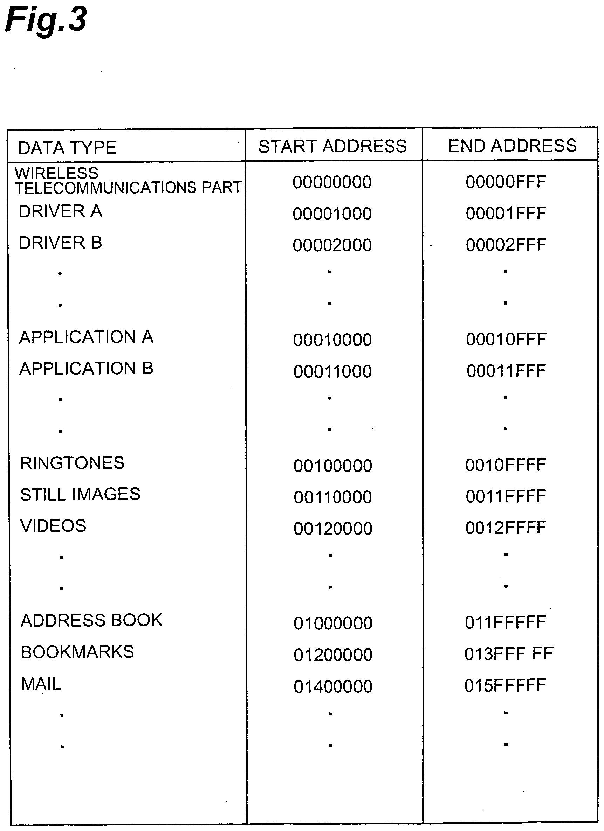

Fig. 3 shows an example of memory mapping information. The memory mapping information is information indicating which memory area stores which internal data of mobile station, and the example of memory mapping information in Fig. 3 is composed of data types, start addresses, and end addresses. However, the necessary condition for the memory mapping information is to clearly specify which memory area stores which internal data of mobile station, and it is thus possible to adopt any configuration other than the configuration example of Fig. 3 as long as it is of data structure that can be handled by PC 20 or by mobile station B.

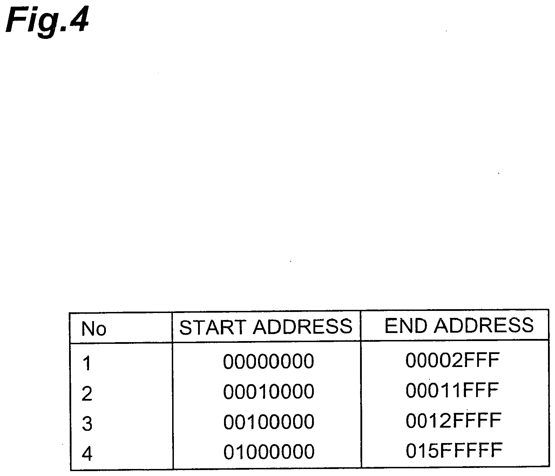

Fig. 4 shows an example of area information. The area information is information for specifying data memory areas to be moved, and is composed of start addresses and end addresses. In specific selection of area information, a memory area of data to be moved can be selected by using information about the memory area (e.g., "entire data stored in a mobile station", "only the base part of a cell phone", "only part of the base part of a cell phone", "only downloaded data and PIM data", etc.).

Fig. 4 shows an example in which one area information designates four inconsecutive memory areas, but one area information may designate one memory area. Since the necessary condition for the area information is that it clearly specifies a range of a memory area where data to be moved is stored, it is also possible to adopt any configuration other than the configuration example of Fig. 4 as long as it is of data structure that can be handled by PC 20 or by mobile station B.

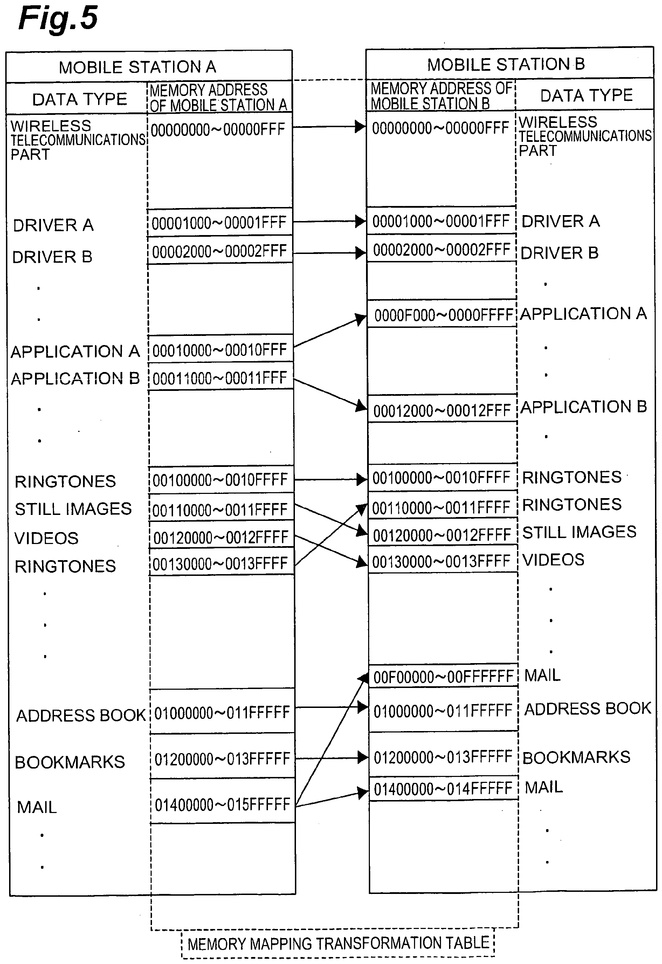

Fig. 5 shows an example of a memory mapping transformation table. The memory mapping transformation table is information for designating memory addresses of destination mobile station B corresponding to memory addresses of source mobile station A, and is composed of memory addresses of mobile station A and, memory addresses of mobile station B corresponding to the memory addresses of mobile station A. There are various cases, such as a case where a memory address of mobile station A is the same as that of mobile station B like the wireless communication part, driver A, driver B, the address book, and bookmarks shown in Fig. 5; a case where a memory address of mobile station A is different from a memory address of mobile station B like application A and application B; a case where data is separately managed in mobile station A but is managed in a certain area in mobile station B like ringtones; and a case where data is managed in a certain area in mobile station A but is separately managed in mobile station B like mail messages. Of course, by designating the memory addresses of mobile station B corresponding to the memory addresses of mobile station A, it becomes feasible to restore the source data in correct memory areas of mobile station A from the mobile station B. Since the necessary condition for the memory mapping transformation table is that it clearly specifies the correspondence between the memory addresses of mobile stations A, B, it is also possible to adopt any configuration other than the configuration example of Fig. 5 as long as it is of data structure that can be handled by PC 20 or by mobile station B.

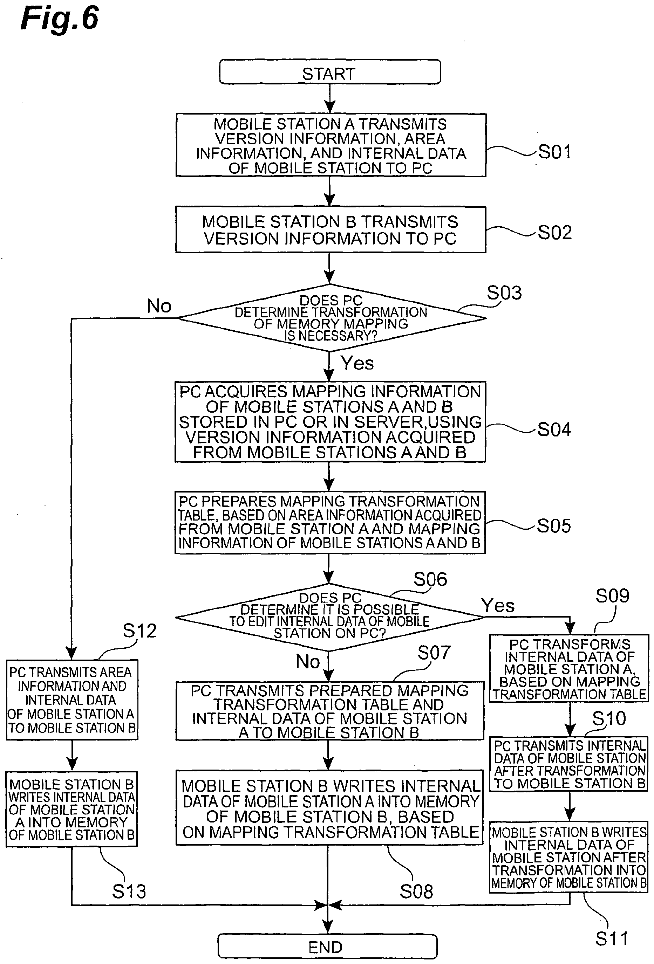

Next, a data moving process in the first embodiment will be described on the basis of Fig. 6. Fig. 6 shows a sequential flow of the data moving process in the communication system of Fig. 1.

Initially, mobile station A transmits version information of a hardware device in charge of memory mapping (hereinafter referred to simply as "version information") as information by which the memory mapping can be confirmed, area information, and internal data of mobile station (source data), to PC 20 (S01).

The version information may be, for example, a serial number of mobile station A or may be newly set as information by which the memory mapping can be confirmed. The process of starting (or activating) the transmission of the version information, area information, and internal data of mobile station may be carried out by the mobile station A as at S01, but may be carried out by PC 20. If memory areas as objects to be moved are preliminarily set in the system (e.g., a system permitting transmission of only an address book, or the like), the area information does not have to be transmitted at S01. If the version is preliminarily designated in the system or if it is assured that there is no need for preparation of the memory mapping transformation table, the version information does not have to be transmitted at S01.

Then the mobile station B transmits the version information of mobile station B to PC 20 (S02). Just as in the case of the version information of mobile station A, the process of starting (or activating) the transmission of version information of mobile station B may be carried out by mobile station B as at S02, but may also be carried out by PC 20. If the version is preliminarily designated in the system or if it is assured that there is no need for preparation of the memory mapping transformation table, the version information does not have to be transmitted at S02.

Next, PC 20 determines whether a transformation of memory mapping is necessary, based on the version information of mobile station A and the version information of mobile station B thus transmitted (S03). In this determination, for example, PC 20 may determine that the transformation of memory mapping is unnecessary only if the mobile stations A, B are of the same version, or may make a determination on the basis of a predetermined version correspondence table (i.e., a table indicating version correspondences between mobile stations free of the transformation of memory mapping).

When it is determined at S03 that the transformation of memory mapping is necessary, PC 20 acquires the memory mapping information of mobile station A and mobile station B stored in the mapping DB 31 of server 30 from server 30, using the version information of mobile station A and mobile station B (S04), and prepares a memory mapping transformation table, based on the acquired memory mapping information of mobile station A and mobile station B and the area information acquired from mobile station A (S05).

Since the determination at S03 on whether the transformation of memory mapping is necessary is made based on the version information of mobile station A and mobile station B, the transmission of the area information from mobile station A, B to PC 20 may be carried out immediately after the determination on whether the transformation of memory mapping is necessary. The timing when PC 20 acquires the internal data of mobile station from mobile station A may also be immediately after the determination on whether the transformation of memory mapping is necessary.

Next, PC 20 determines whether it is possible to implement editing of the internal data of mobile station on PC 20 (i.e., reallocation in the internal data of mobile station on the basis of the memory mapping transformation table) (S06). The present embodiment adopts a mode in which if it is possible to perform the editing of internal data of mobile station on PC 20, it is executed on PC 20. The reason is that the process of editing the internal data of mobile station causes a high processing load, and the total processing efficiency of the system is thus higher when it is executed on PC 20 than when it is executed on mobile station B with lower processing ability than PC 20.

When it is determined at S06 that it is impossible to perform the editing of the internal data of mobile station on PC 20 for some reason, e.g., because the internal data of mobile station is encrypted, PC 20 transmits the memory mapping transformation table prepared at S05 and the internal data of mobile station acquired from mobile station A to mobile station B (S07). Then the mobile station B writes the internal data of mobile station into memory 11 on the basis of the memory mapping transformation table thus transmitted (S08). After it is confirmed that the data is normally written, the process of Fig. 6 is terminated.

On the other hand, when it is determined at S06 that it is possible to perform the editing of internal data of mobile station on PC 20, PC 20 transforms the internal data of mobile station acquired from the mobile station A, based on the mapping transformation table prepared at S05 (S09), and then transmits the internal data of mobile station after the transformation to the mobile station B (S10). Then the mobile station B writes the internal data of mobile station after the transformation thus transmitted, into the memory 11 (S11). After it is confirmed that the data is normally written, the process of Fig. 6 is terminated.

When it is determined at S03 that there is no need for the transformation of memory mapping, PC 20 transmits only the area information of mobile station A and the internal data of mobile station, to mobile station B (S12). Then the mobile station B writes the internal data of mobile station into memory 11 in accordance with the area information of mobile station A thus transmitted (S13). After it is confirmed that the data is normally written, the process of Fig. 6 is terminated.

At S06, PC 20 may determine whether the editing of the internal data of mobile station on PC 20 is necessary. Namely, PC 20 may determine whether it is necessary to perform the editing of internal data of mobile station on PC 20, by determining whether it is difficult for mobile station B to perform the editing of internal data of mobile station, based on the version information of mobile station B and the processing load on mobile station B.

### [Second Embodiment]

The second embodiment will describe a mode wherein in data movement PC 20 determines whether a memory mapping transformation is necessary and when the transformation is necessary, PC 20 acquires a mapping transformation table stored in server 30 and transmits the acquired mapping transformation table together with the internal data of mobile station A to mobile station B.

The configurations of each mobile station, PC 20, etc. are substantially the same as in the first embodiment described above, except for the following points. The mapping DB 31 of server 30 preliminarily stores a data structure transformation table to be used for data movement from mobile station A to mobile station B, as information necessary on the occasion of movement of the source data from the source mobile station A to the destination mobile station B. The table acquirer 23 of PC 20 acquires the table by receiving the data structure transformation table from server 30.

The information necessary on the occasion of movement of the source data ("data structure transformation table" in the second embodiment) may also be stored in a memory (not shown) in PC 20, instead of being stored in server 30. The configuration examples of various data of Figs. 2 to 5 are the same as in the first embodiment.

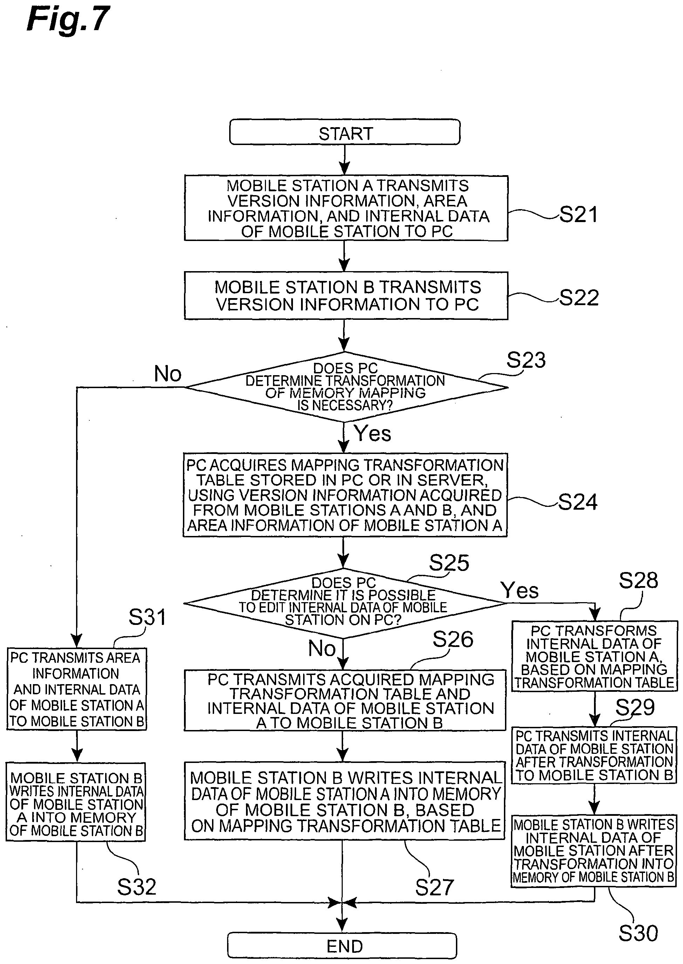

Next, a data moving process in the second embodiment will be described on the basis of Fig. 7. Fig. 7 shows a sequential flow of the data moving process in the communication system of Fig. 1.

Initially, mobile station A transmits the area information and the internal data of mobile station (source data), together with the version information as information by which the memory mapping can be confirmed, to PC 20 (S21).

The version information may be, for example, a serial number of mobile station A or may be newly set as information by which the memory mapping can be confirmed. The process of starting (or activating) the transmission of the version information, area information, and internal data of mobile station may be carried out by the mobile station A as at S21, but may be carried out by PC 20. If memory areas as objects to be moved are preliminarily set in the system (e.g., a system permitting transmission of only an address book, or the like), the area information does not have to be transmitted at S21. If the version is preliminarily designated in the system or if it is assured that there is no need for preparation of the memory mapping transformation table, the version information does not have to be transmitted at S21.

Then the mobile station B transmits the version information of mobile station B to PC 20 (S22). Just as in the case of the version information of mobile station A, the process of starting (or activating) the transmission of version information of mobile station B may be carried out by mobile station B as at S22, but may also be carried out by PC 20. If the version is preliminarily designated in the system or if it is assured that there is no need for preparation of the memory mapping transformation table, the version information does not have to be transmitted at S22.

Next, PC 20 determines whether a transformation of memory mapping is necessary, based on the version information of mobile station A and the version information of mobile station B thus transmitted (S23). In this determination, for example, PC 20 may determine that the transformation of memory mapping is unnecessary only if the mobile stations A, B are of the same version, or may make a determination on the basis of a predetermined version correspondence table (i.e., a table indicating version correspondences between mobile stations free of the transformation of memory mapping).

When it is determined at S23 that the transformation of memory mapping is necessary, PC 20 acquires the memory mapping transformation table stored in the mapping DB 31 of server 30, using the version information of mobile station A and mobile station B, from server 30 (S24).

Since the determination at S23 on whether the transformation of memory mapping is necessary is made based on the version information of mobile station A and mobile station B, the transmission of the area information from mobile station A, B to PC 20 may be carried out immediately after the determination on whether the transformation of memory mapping is necessary. The timing when PC 20 acquires the internal data of mobile station from mobile station A may also be immediately after the determination on whether the transformation of memory mapping is necessary.

Next, PC 20 determines whether it is possible to implement editing of the internal data of mobile station on PC 20 (i.e., reallocation in the internal data of mobile station on the basis of the memory mapping transformation table) (S25). The present embodiment adopts a mode in which if it is possible to perform the editing of internal data of mobile station on PC 20, it is executed on PC 20. The reason is that the process of editing the internal data of mobile station causes a high processing load and the total processing efficiency of the system is thus higher when it is executed on PC 20 than when it is executed on mobile station B with lower processing ability than PC 20.

When it is determined at S25 that it is impossible to perform the editing of the internal data of mobile station on PC 20 for some reason, e.g., because the internal data of mobile station is encrypted, PC 20 transmits the memory mapping transformation table acquired at S24 and the internal data of mobile station acquired from mobile station A, to mobile station B (S26). Then the mobile station B writes the internal data of mobile station into memory 11 on the basis of the memory mapping transformation table thus transmitted (S27). After it is confirmed that the data is normally written, the process of Fig. 7 is terminated.

On the other hand, when it is determined at S25 that it is possible to perform the editing of internal data of mobile station on PC 20, PC 20 transforms the internal data of mobile station acquired from the mobile station A, based on the mapping transformation table prepared at S24 (S28), and then transmits the internal data of mobile station after the transformation to the mobile station B (S29). Then the mobile station B writes the internal data of mobile station after the transformation thus transmitted, into the memory 11 (S30). After it is confirmed that the data is normally written, the process of Fig. 7 is terminated.

When it is determined at S23 that there is no need for the transformation of memory mapping, PC 20 transmits only the area information of mobile station A and the internal data of mobile station, to mobile station B (S31). Then the mobile station B writes the internal data of mobile station into memory 11 in accordance with the area information of mobile station A thus transmitted (S32). After it is confirmed that the data is normally written, the process of Fig. 7 is terminated.

At S25, PC 20 may determine whether the editing of the internal data of mobile station on PC 20 is necessary. Namely, PC 20 may determine whether it is necessary to perform the editing of internal data of mobile station on PC 20, by determining whether it is difficult for mobile station B to perform the editing of internal data of mobile station, based on the version information of mobile station B and the processing load on mobile station B.

### [Third Embodiment]

The third embodiment will describe a mode wherein in data movement PC 20 determines whether a memory mapping transformation is necessary and when the transformation is necessary, the mobile station B prepares a mapping transformation table on the basis of the mapping information of mobile station A acquired from server 30 and the mapping information of its own (mobile station B) and writes the internal data of mobile station A into memory 11 on the basis of the prepared mapping transformation table.

The configurations of each mobile station, PC 20, etc. are substantially the same as in the aforementioned first embodiment, except for the following points. The mapping DB 31 of server 30 preliminarily stores the mapping information of mobile station A as information necessary on the occasion of movement of the source data from the source mobile station A to the destination mobile station B. The table acquirer 23 of PC 20 acquires the mapping information of mobile station A, using the version information of mobile station A, from server 30.

The information necessary on the occasion of movement of the source data ("mapping information of mobile station A" in the third embodiment) may be stored in a memory (not shown) in PC 20, instead of being stored in server 30. The configuration examples of various data of Figs. 2 to 5 are the same as in the first embodiment.

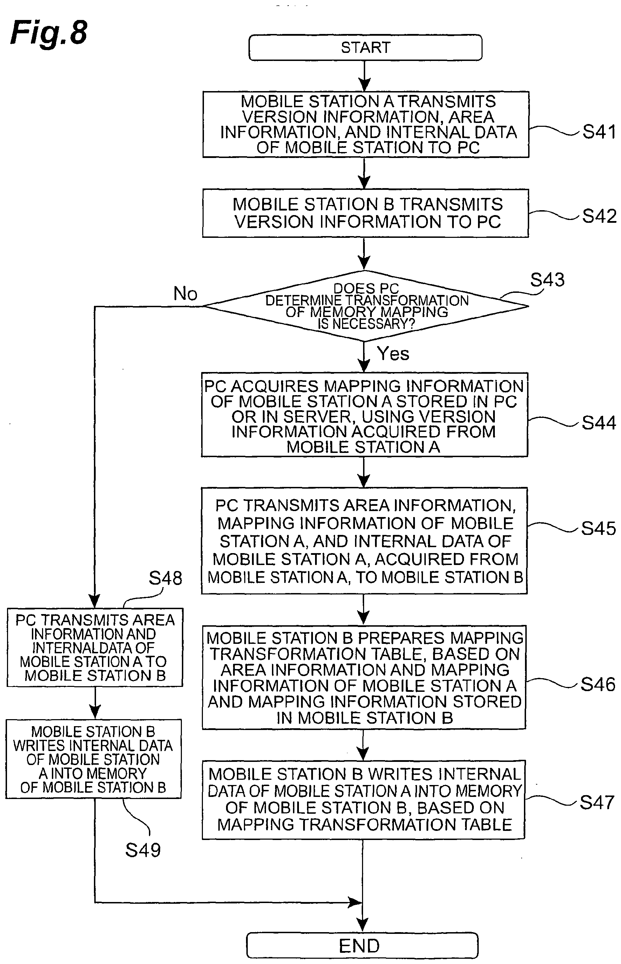

Next, a data moving process in the third embodiment will be described on the basis of Fig. 8. Fig. 8 shows a sequential flow of the data moving process in the communication system of Fig. 1.

Initially, mobile station A transmits the area information and the internal data of mobile station (source data), together with the version information as information by which the memory mapping can be confirmed, to PC 20 (S41).

The version information may be, for example, a serial number of mobile station A or may be newly set as information by which the memory mapping can be confirmed. The process of starting (or activating) the transmission of the version information, area information, and internal data of mobile station may be carried out by the mobile station A as at S41, but may be carried out by PC 20. If memory areas as objects to be moved are preliminarily set in the system (e.g., a system permitting transmission of only an address book, or the like), the area information does not have to be transmitted at S41. If the version is preliminarily designated in the system or if it is assured that there is no need for preparation of the memory mapping transformation table, the version information does not have to be transmitted at S41.

Then the mobile station B transmits the version information of mobile station B to PC 20 (S42). Just as in the case of the version information of mobile station A, the process of starting (or activating) the transmission of version information of mobile station B may be carried out by mobile station B as at S42, but may also be carried out by PC 20. If the version is preliminarily designated in the system or if it is assured that there is no need for preparation of the memory mapping transformation table, the version information does not have to be transmitted at S42.

Next, PC 20 determines whether a transformation of memory mapping is necessary, based on the version information of mobile station A and the version information of mobile station B transmitted (S43). In this determination, for example, PC 20 may determine that the transformation of memory mapping is unnecessary only if the mobile stations A, B are of the same version, or may make a determination on the basis of a predetermined version correspondence table (i.e., a table indicating version correspondences between mobile stations free of the transformation of memory mapping).

When it is determined at S43 that the transformation of memory mapping is necessary, PC 20 acquires the mapping information of mobile station A stored in the mapping DB 31 of server 30, using the version information of mobile station A (S44), from server 30.

Since the determination at S43 on whether the transformation of memory mapping is necessary is made based on the version information of mobile station A and mobile station B, the transmission of the area information from mobile station A, B to PC 20 may be carried out immediately after the determination on whether the transformation of memory mapping is necessary. The timing when PC 20 acquires the internal data of mobile station from mobile station A may also be immediately after the determination on whether the transformation of memory mapping is necessary.

Next, PC 20 transmits the mapping information of mobile station A acquired at S44, and the area information and the internal data of mobile station acquired from mobile station A, to mobile station B (S45).

The mobile station B prepares a memory mapping transformation table, based on the area information and mapping information of mobile station A transmitted and based on the mapping information of mobile station B stored in the mobile station B (S46). Then the mobile station B writes the internal data of mobile station A into memory 11, based on the prepared memory mapping transformation table (S47). After it is confirmed that the data is normally written, the process of Fig. 8 is terminated.

On the other hand, when it is determined at S43 that there is no need for the transformation of memory mapping, PC 20 transmits only the area information of mobile station A and the internal data of mobile station (S48), to mobile station B. Then the mobile station B writes the internal data of mobile station into memory 11 in accordance with the area information of mobile station A thus transmitted (S49). After it is confirmed that the data is normally written, the process of Fig. 8 is terminated.

The present embodiment adopts the process in which the mobile station B prepares the memory mapping transformation table and thereafter writes the internal data of mobile station A into memory 11, but it is also possible to adopt a process in which the mobile station B writes the internal data of mobile station A directly into the memory 11, based on the memory mapping information of mobile stations A, B and the area information of mobile station A. If it is difficult for the mobile station B to prepare the memory mapping transformation table because of a restriction of performance of mobile station B or the like, it is also possible to adopt a configuration wherein the mobile station B transmits the memory mapping information of mobile station B to PC 20 and the memory mapping transformation table is prepared on the PC 20 and is then transmitted to the mobile station B.

### [Fourth Embodiment]

The fourth embodiment will describe a mode wherein in data movement PC 20 determines whether a memory mapping transformation is necessary and when the transformation is necessary, the mobile station B prepares a mapping transformation table on the basis of the mapping information of mobile station A acquired from mobile station A and the mapping information of its own (mobile station B) and writes the internal data of mobile station A into memory 11 on the basis of the prepared mapping transformation table.

The configurations of each mobile station, PC 20, etc. are substantially the same as in the aforementioned first embodiment, except for the following point. Since no information is acquired from server 30 in the present embodiment, the system configuration does not have to include the server 30. The configuration examples of the various data of Figs. 2 to 5 are the same as in the first embodiment.

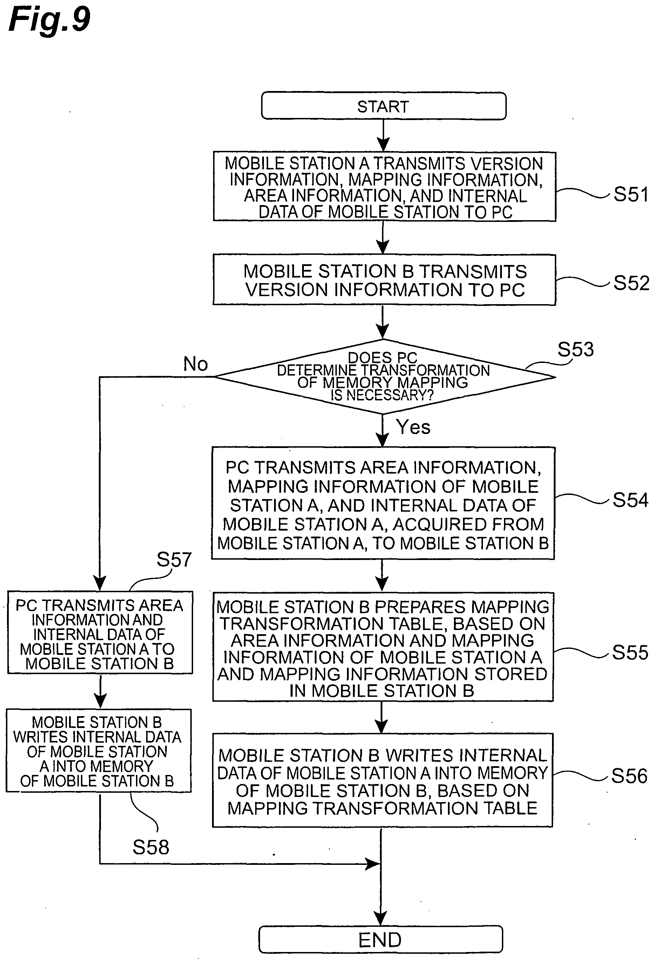

Next, a data moving process in the fourth embodiment will be described on the basis of Fig. 9. Fig. 9 shows a sequential flow of the data moving process in the communication system of Fig. 1.

Initially, the mobile station A transmits the version information and mapping information as information by which the memory mapping can be confirmed, and the area information and internal data of mobile station (source data), to PC 20 (S51).

The version information may be, for example, a serial number of mobile station A or may be newly set as information by which the memory mapping can be confirmed. The process of starting (or activating) the transmission of the version information, area information, and internal data of mobile station may be carried out by the mobile station A as at S51, but may be carried out by PC 20. If memory areas as objects to be moved are preliminarily set in the system (e.g., a system permitting transmission of only an address book, or the like), the area information does not have to be transmitted at S51. If the version is preliminarily designated in the system or if it is assured that there is no need for preparation of the memory mapping transformation table, the version information does not have to be transmitted at S51.

Then the mobile station B transmits the version information of mobile station B to PC 20 (S52). Just as in the case of the version information of mobile station A, the process of starting (or activating) the transmission of version information of mobile station B may be carried out by mobile station B as at S52, but may also be carried out by PC 20. If the version is preliminarily designated in the system or if it is assured that there is no need for preparation of the memory mapping transformation table, the version information does not have to be transmitted at S52.

Next, PC 20 determines whether a transformation of memory mapping is necessary, based on the version information of mobile station A and the version information of mobile station B transmitted (S53). In this determination, for example, PC 20 may determine that the transformation of memory mapping is unnecessary only if the mobile stations A, B are of the same version, or may make a determination on the basis of a predetermined version correspondence table (i.e., a table indicating version correspondences between mobile stations free of the transformation of memory mapping).

Since the determination at S53 on whether the transformation of memory mapping is necessary is made based on the version information of mobile station A and mobile station B, the transmission of the area information from mobile station A to PC 20 may be carried out immediately after the determination on whether the transformation of memory mapping is necessary. The timing when PC 20 acquires the internal data of mobile station from mobile station A may also be immediately after the determination on whether the transformation of memory mapping is necessary.

When it is determined at S53 that the transformation of memory mapping is necessary, PC 20 transmits the area information of mobile station A, the mapping information, and the internal data of mobile station acquired from the mobile station A, to mobile station B (S54).

The mobile station B prepares a memory mapping transformation table, based on the area information and mapping information of mobile station A transmitted and based on the mapping information of mobile station B stored in the mobile station B (S55). Then the mobile station B writes the internal data of mobile station A into memory 11, based on the prepared memory mapping transformation table (S56). After it is confirmed that the data is normally written, the process of Fig. 9 is terminated.

On the other hand, when it is determined at S53 that there is no need for the transformation of memory mapping, PC 20 transmits only the area information of mobile station A and the internal data of mobile station, to mobile station B (S57). Then the mobile station B writes the internal data of mobile station into memory 11 in accordance with the area information of mobile station A thus transmitted (S58). After it is confirmed that the data is normally written, the process of Fig. 9 is terminated.

The present embodiment adopts the process in which the mobile station B prepares the memory mapping transformation table and thereafter writes the internal data of mobile station A into memory 11, but it is also possible to adopt a process in which the mobile station B writes the internal data of mobile station A directly into the memory 11, based on the memory mapping information of mobile stations A, B and the area information of mobile station A. If it is difficult for the mobile station B to prepare the memory mapping transformation table because of a restriction of performance of mobile station B or the like, it is also possible to adopt a configuration wherein the mobile station B transmits the memory mapping information of mobile station B to PC 20 and the memory mapping transformation table is prepared on the PC 20 and is then transmitted to the mobile station B.

### [Fifth Embodiment]

The fifth embodiment will describe a mode wherein in data movement PC 20 determines whether a memory mapping transformation is necessary and when the transformation is necessary, PC 20 prepares a mapping transformation table on the basis of the mapping information of mobile stations A, B acquired from the mobile stations A, B, etc. and transmits the mapping transformation table thus prepared, together with the internal data of mobile station A, to mobile station B.

The configurations of each mobile station, PC 20, etc. are substantially the same as in the aforementioned first embodiment, except for the following point. Since no information is acquired from server 30 in the present embodiment, the system configuration does not have to include the server 30. The configuration examples of the various data of Figs. 2 to 5 are the same as in the first embodiment.

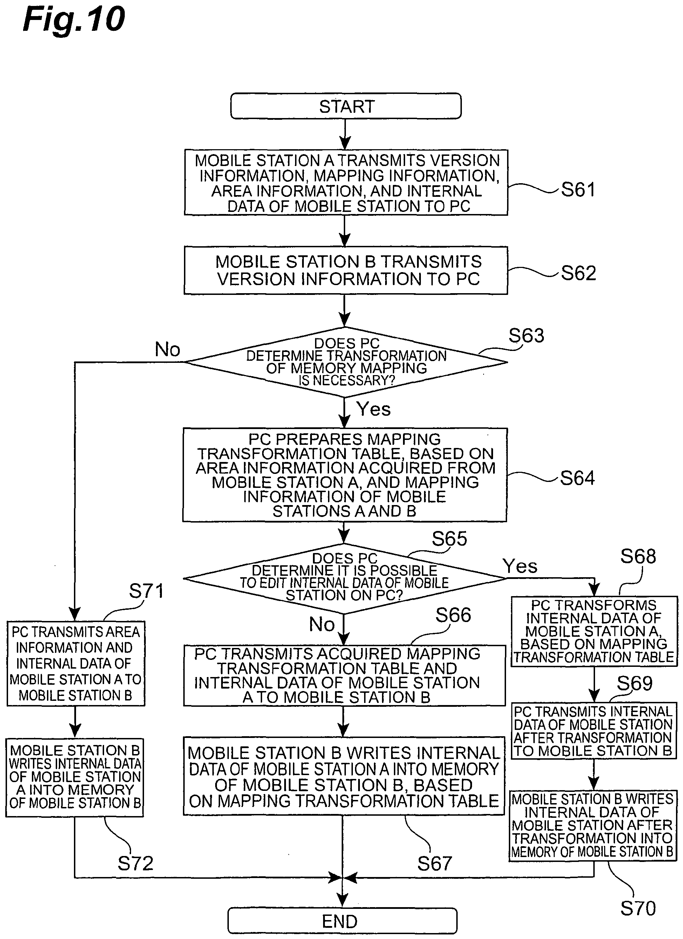

Next, a data moving process in the fifth embodiment will be described on the basis of Fig. 10. Fig. 10 shows a sequential flow of the data moving process in the communication system of Fig. 1.

Initially, the mobile station A transmits the version information and mapping information as information by which the memory mapping can be confirmed, and the area information and internal data of mobile station (source data), to PC 20 (S61).

The version information may be, for example, a serial number of mobile station A or may be newly set as information by which the memory mapping can be confirmed. The process of starting (or activating) the transmission of the version information, area information, and internal data of mobile station may be carried out by the mobile station A as at S61, but may be carried out by PC 20. If memory areas as objects to be moved are preliminarily set in the system (e.g., a system permitting transmission of only an address book, or the like), the area information does not have to be transmitted at S61. If the version is preliminarily designated in the system or if it is assured that there is no need for preparation of the memory mapping transformation table, the version information does not have to be transmitted at S61.

Then the mobile station B transmits the version information and mapping information of mobile station B, to PC 20 (S62). Just as in the case of the version information of mobile station A, the process of starting (or activating) the transmission of version information of mobile station B may be carried out by mobile station B as at S62, but may also be carried out by PC 20. If the version is preliminarily designated in the system or if it is assured that there is no need for preparation of the memory mapping transformation table, the version information does not have to be transmitted at S62.

Next, PC 20 determines whether a transformation of memory mapping is necessary, based on the version information of mobile station A and the version information of mobile station B transmitted (S63). In this determination, for example, PC 20 may determine that the transformation of memory mapping is unnecessary only if the mobile stations A, B are of the same version, or may make a determination on the basis of a predetermined version correspondence table (i.e., a table indicating version correspondences between mobile stations free of the transformation of memory mapping).

When it is determined at S63 that the transformation of memory mapping is necessary, PC 20 prepares a memory mapping transformation table, based on the area information acquired from mobile station A and based on the mapping information of mobile station A and mobile station B (S64)

Since the determination at S63 on whether the transformation of memory mapping is necessary is made based on the version information of mobile station A and mobile station B, the transmission of the area information from mobile station A to PC 20 may be carried out immediately after the determination on whether the transformation of memory mapping is necessary. The timing when PC 20 acquires the internal data of mobile station from mobile station A may also be immediately after the determination on whether the transformation of memory mapping is necessary.

Next, PC 20 determines whether it is possible to implement editing of the internal data of mobile station on PC 20 (i.e., reallocation in the internal data of mobile station on the basis of the memory mapping transformation table) (S65). The present embodiment adopts a mode in which if it is possible to perform the editing of internal data of mobile station on PC 20, it is executed on PC 20. The reason is that the process of editing the internal data of mobile station causes a high processing load and the total processing efficiency of the system is thus higher when it is executed on PC 20 than when it is executed on mobile station B with lower processing ability than PC 20.

When it is determined at S65 that it is impossible to perform the editing of the internal data of mobile station on PC 20 for some reason, e.g., because the internal data of mobile station is encrypted, PC 20 transmits the memory mapping transformation table prepared at S64 and the internal data of mobile station acquired from mobile station A, to mobile station B (S66). Then the mobile station B writes the internal data of mobile station into memory 11 on the basis of the memory mapping transformation table thus transmitted (S67). After it is confirmed that the data is normally written, the process of Fig. 10 is terminated.

On the other hand, when it is determined at S65 that it is possible to perform the editing of internal data of mobile station on PC 20, PC 20 transforms the internal data of mobile station acquired from the mobile station A, based on the mapping transformation table prepared at S64 (S68), and then transmits the internal data of mobile station after the transformation to the mobile station B (S69). Then the mobile station B writes the internal data of mobile station after the transformation thus transmitted, into the memory 11 (S70). After it is confirmed that the data is normally written, the process of Fig. 10 is terminated.

When it is determined at S63 that there is no need for the transformation of memory mapping, PC 20 transmits only the area information of mobile station A and the internal data of mobile station, to mobile station B (S71). Then the mobile station B writes the internal data of mobile station into memory 11 in accordance with the area information of mobile station A thus transmitted (S72). After it is confirmed that the data is normally written, the process of Fig. 10 is terminated.

At S65, PC 20 may determine whether the editing of the internal data of mobile station on PC 20 is necessary. Namely, PC 20 may determine whether it is necessary to perform the editing of internal data of mobile station on PC 20, by determining whether it is difficult for mobile station B to perform the editing of internal data of mobile station, based on the version information of mobile station B and the processing load on mobile station B.

### [Sixth Embodiment]

The sixth embodiment will describe a mode wherein in data movement mobile station B determines whether a memory mapping transformation is necessary and when the transformation is necessary, the mobile station B prepares a mapping transformation table on the basis of the mapping information of mobile station A acquired from mobile station A and the mapping information of its own (mobile station B) and writes the internal data of mobile station A into its memory on the basis of the prepared mapping transformation table.

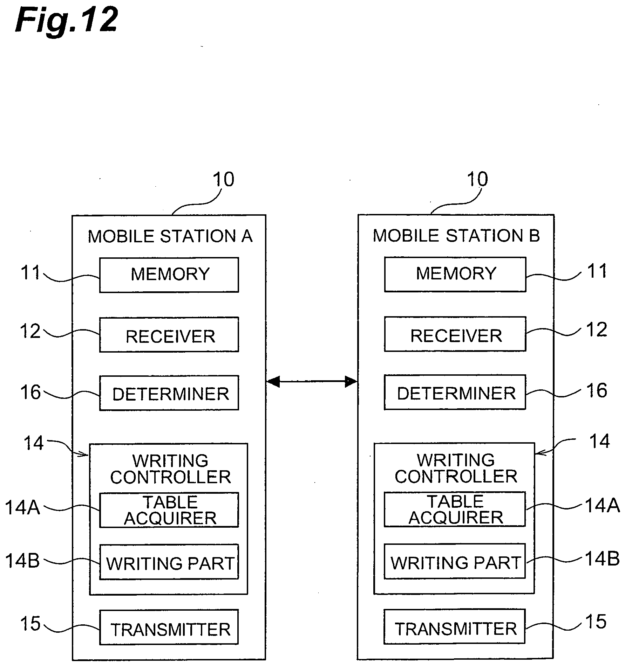

Fig. 12 shows a configuration diagram of a communication system consisting of a plurality of mobile stations in the sixth embodiment. As shown in the same figure, the communication system is constructed including mobile station A as a data source and mobile station B as a data destination. Each mobile station can be a data source at a certain time and a data destination at another time; the following will describe a case wherein the internal data of mobile station A is moved from mobile station A to mobile station B.

Each mobile station 10 is constructed including the configuration associated with mobile telecommunications, not shown, and a configuration associated with the present invention, which consists of a memory 11 for storing data; a receiver 12 for receiving internal data (source data) in an as-stored format in a memory of a source mobile station, the version information of the source mobile station, etc.; a determiner 16 for determining whether a data structure of the source data needs to be transformed, based on the version information, etc. of the host device as a destination and the version information, etc. of the source mobile station received; a writing controller 14 for performing a control of writing of the source data into memory 11; and a transmitter 15 for transmitting the version information, etc. of the host device to a destination mobile station when the host device is a source mobile station.

Among these components, the writing controller 14 is constructed including a table acquirer 14A for, when it is determined that the data structure of the source data needs to be transformed, acquiring a data structure transformation table for writing the source data in accordance with the data structure of the host device (destination mobile station); and a writing part 14B for performing writing of the source data on the basis of the acquired data structure transformation table and writing of the raw source data when it is determined that there is no need for the transformation of the data structure of the source data.

Since the necessary condition for each mobile station 10 is that it is comprised of the above configuration, the mobile stations may be of the same model of hardware or different models of hardware. The configuration examples of the various data of Figs. 2 to 5 are the same as in the first embodiment.

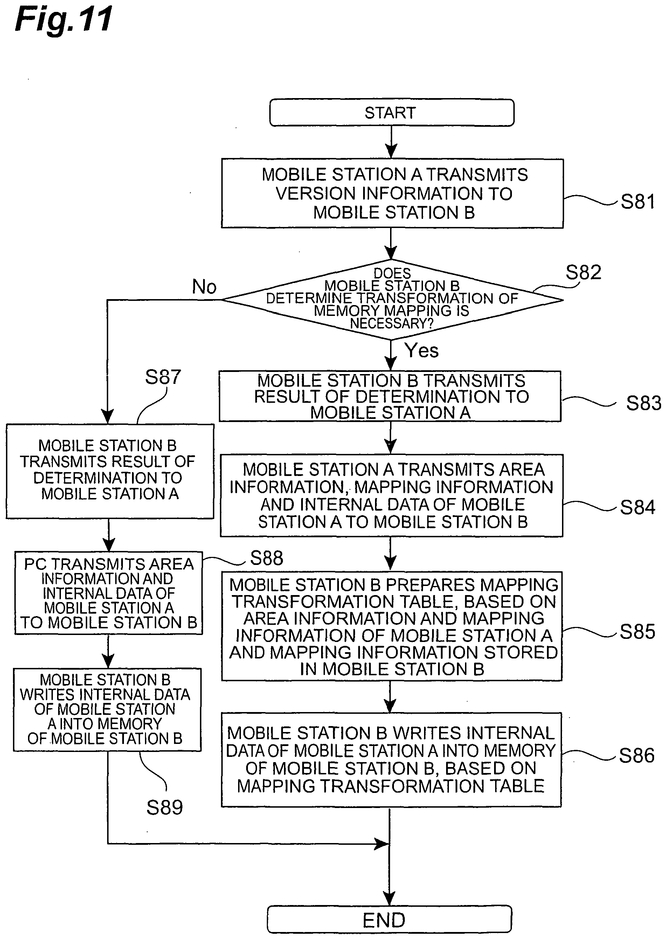

Next, a data moving process in the sixth embodiment will be described on the basis of Fig. 11. Fig. 11 shows a sequential flow of the data moving process in the communication system of Fig. 12.

Initially, the mobile station A transmits the version information as information by which the memory mapping can be confirmed, to mobile station B (S81). The version information may be, for example, a serial number of mobile station A or may be newly set as information by which the memory mapping can be confirmed. The process of starting (or activating) the transmission of the version information may be carried out by the mobile station A as at S81, but may be carried out by mobile station B. If the version is preliminarily designated in the system or if it is assured that there is no need for preparation of the memory mapping transformation table, the version information does not have to be transmitted at S81.

Then the mobile station B determines whether a transformation of memory mapping is necessary, based on the version information of mobile station A transmitted and the version information of its own (mobile station B) (S82), and notifies mobile station A of a result of the determination (S83, S87). In this determination at S82, for example, mobile station B may determine that the transformation of memory mapping is unnecessary only if the mobile stations A, B are of the same version, or may make a determination on the basis of a predetermined version correspondence table (i.e., a table indicating version correspondences between mobile stations free of the transformation of memory mapping).

When receiving the result of the determination that the transformation of memory mapping is necessary, the mobile station A transmits the area information, mapping information, and internal data of mobile station (source data) of its own (mobile station A) to the mobile station B (S84). The process of starting (or activating) the transmission of the area information, mapping information, and internal data of mobile station may be carried out by the mobile station A as at S84, but may also be carried out by the mobile station B. The area information does not have to be transmitted at S84 if a memory area as a target to be moved is preliminarily set in the system (e.g., a system permitting transmission of only the address book or the like).

The transmission of the area information, mapping information and internal data of mobile station, from mobile station A to mobile station B may be carried out before the determination on whether the transformation of memory mapping is necessary (e.g., in the process of S81).

The mobile station B prepares a memory mapping transformation table, based on the area information and mapping information of mobile station A transmitted and based on the mapping information of mobile station B stored in the mobile station B (S85). Then the mobile station B writes the internal data of mobile station A into memory 11, based on the prepared memory mapping transformation table (S86). After it is confirmed that the data is normally written, the process of Fig. 11 is terminated.

On the other hand, when receiving the result of the determination that the transformation of memory mapping is unnecessary, the mobile station A transmits only the area information and the internal data of mobile station of its own (mobile station A) to the mobile station B (S88). The process of starting (or activating) the transmission of the area information and internal data of mobile station may be carried out by the mobile station A as at S88, but may also be carried out by mobile station B.

Then the mobile station B writes the internal data of mobile station into the memory 11 in accordance with the area information of mobile station A transmitted (S89). After it is confirmed that the data is normally written, the process of Fig. 11 is terminated.

The sixth embodiment adopts the process in which the mobile station B prepares the memory mapping transformation table and thereafter writes the internal data of mobile station A into the memory 11, but it is also possible to adopt a configuration wherein the mobile station B writes the internal data of mobile station A directly into the memory 11, based on the memory mapping information of mobile stations A, B and the area information of mobile station A.

### [Effects of Embodiments]

In each of the first to sixth embodiments described above, even in the case of the data movement between mobile stations with different memory mappings, the use of the mapping transformation table enables mobile station B to write the internal data of mobile station A (source data) into the memory 11 of mobile station B in accordance with the memory mapping of mobile station B. This permits the source data to be moved to the mobile station B, without need for a special user operation such as selection of data. Since the link relations between data can be maintained, there is no need for again performing user setting. In this manner, the user's load is reduced in the data movement and the user's convenience is improved.

Each of the above embodiments described the mode using PC as the memory mapping control apparatus according to the present invention, and using the mobile stations as the information storage controllers, but it is noted that the memory mapping control apparatus is not limited to PC but any computer with the data communication function is commonly applicable. The information storage controllers are not limited to the mobile stations, either, and any computers with the storage function for storage of user data or the like and with the data communication function are commonly applicable.

### [Configurations of a Data Moving Program]

Lastly, a data moving program for letting the memory mapping control apparatus (PC 20 as an example) execute the above-described data moving processes and a data moving program for letting a destination mobile station (mobile station B) execute the aforementioned data moving process will be described below in order.

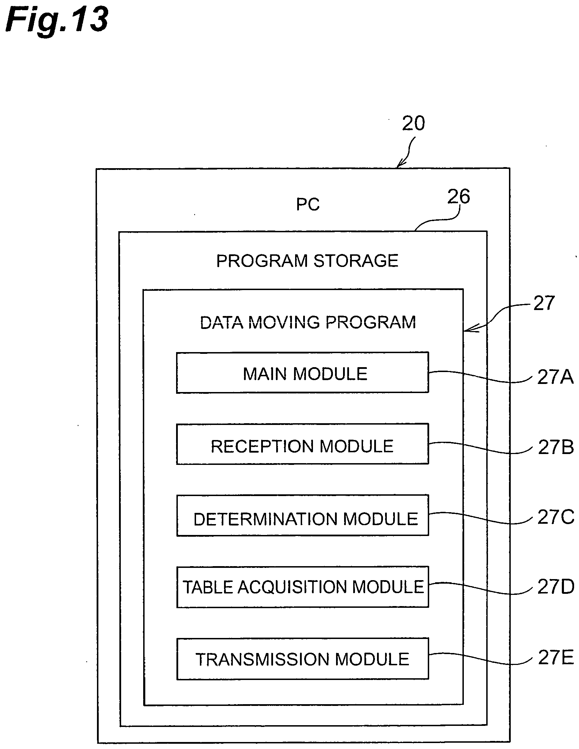

As shown in Fig. 13, a data moving program 27 on PC 20 is stored in a program storage 26 in PC 20. As shown in this Fig. 13, the data moving program 27 is configured including a main module 27A for generally controlling the data moving process; a reception module 27B for receiving source data in an as-stored format in a memory of a source mobile station, the version information of the source mobile station, etc.; a determination module 27C for determining whether the data structure of the source data needs to be transformed; a table acquisition module 27D for acquiring a data structure transformation table when it is determined that the data structure of the source data needs to be transformed; and a transmission module 27E for transmitting the data structure transformation table, the source data, etc. to a destination mobile station.

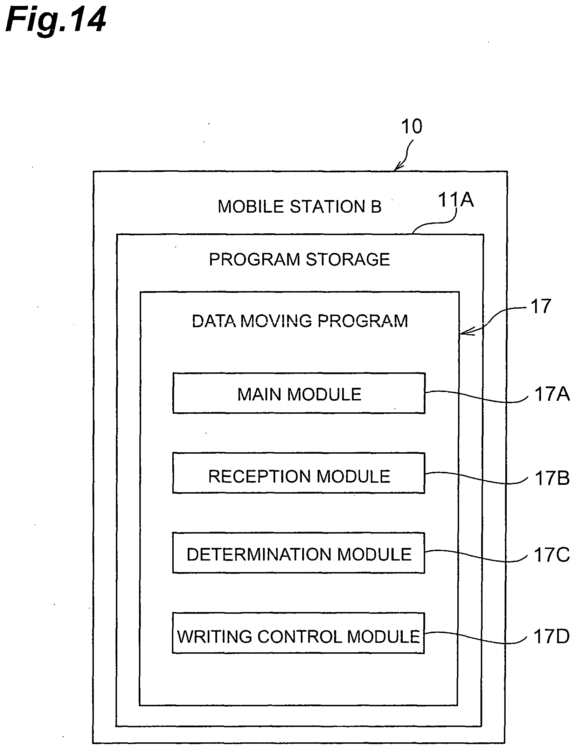

As shown in Fig. 14, a data moving program 17 on a destination mobile station (mobile station B) is stored in a program storage 11A in the memory 11 of mobile station B. As shown in this Fig. 14, the data moving program 17 is configured including a main module 17A for generally controlling the data moving process; a reception module 17B for receiving source data in an as-stored format in a memory of a source mobile station, the version information of the source mobile station, etc.; a determination module 17C for determining whether the data structure of the source data needs to be transformed, based on the version information of its own as a destination and based on the received version information of the source mobile station, etc.; and a writing control module 17D for performing a control of writing of source data into memory 11.

The above data moving programs 27, 17 of the two modes may be configured so that part or the whole thereof is transmitted via a transmission medium such as a wire or wireless telecommunications line to another device or is copied via a recording medium such as a memory stick to another device, and is recorded (or may be installed) in the other device.

## Claims

1. A memory mapping control apparatus used for moving data stored in a memory of a source mobile station, to a memory of a destination mobile station, the memory mapping control apparatus comprising:
receiving means for receiving source data stored in the memory of the source mobile station, from the source mobile station, for receiving source structure specifying information for specifying a memory allocation structure of the data of the source mobile station, from the source mobile station, and for receiving destination structure specifying information for specifying a memory allocation structure of the data of the destination mobile station, from the destination mobile station;
determining means for determining whether a memory allocation structure of the source data needs to be transformed, based on the source structure specifying information and the destination structure specifying information received by the receiving means;
table acquiring means for, when the determining means determines that the memory allocation structure of the source data needs to be transformed, acquiring a memory allocation structure transformation table for writing the source data in accordance with the memory allocation structure of the destination mobile station, based on the source structure specifying information and the destination structure specifying information received by the receiving means;
data editing means for transforming the source data in accordance with the memory allocation structure transformation table acquired by the table acquiring means; and
transmitting means for transmitting the transformed source data by the data editing means, to the destination mobile station.

2. The memory mapping control apparatus according to Claim 1,
wherein the table acquiring means prepares the memory allocation structure transformation table on the basis of the source structure specifying information and the destination structure specifying information, thereby acquiring the memory allocation structure transformation table.

3. The memory mapping control apparatus according to Claim 1 or 2,
wherein the source structure specifying information contains version information of hardware in the source mobile station,
wherein the destination structure specifying information includes version information of hardware in the destination mobile station,
wherein the determining means determines that the memory allocation structure of the source data needs to be transformed, based on the version information contained in the source structure specifying information and the version information contained in the destination structure specifying information received by the receiving means, and
wherein the table acquiring means, when the determining means determines that the memory allocation structure of the source data needs to be transformed, acquires the memory allocation structure transformation table, based on the version information contained in the source structure specifying information and the version information contained in the destination structure specifying information received by the receiving means.

4. The memory mapping control apparatus according to Claim 3,
wherein the source structure specifying information further contains area information that is information for specifying data memory areas to be moved, and
wherein the table acquiring means, when the determining means determines that the memory allocation structure of the source data needs to be transformed, acquires memory mapping information of the source mobile station and the destination mobile station, which is information indicating which memory area stores which mobile station internal data, based on the version information contained in the source structure specifying information and the version information contained in the destination structure specifying information received by the receiving means, and thereby acquires the memory allocation structure transformation table.

5. The memory mapping control apparatus according to Claim 3,
wherein the source structure specifying information further contains memory mapping information that is information indicating which memory area stores which mobile station internal data, and area information that is information for specifying data memory areas to be moved,
wherein the destination structure specifying information further contains memory mapping information, and
wherein the table acquiring means, when the determining means determines that the memory allocation structure of the source data needs to be transformed, prepares the memory allocation structure transformation table on the basis of the memory mapping information and the area information contained in the source structure specifying information, and the memory mapping information contained in the destination structure specifying information, received by the receiving means, and thereby acquires the memory allocation structure transformation table.

6. A communication system comprised of a memory mapping control apparatus used for moving data stored in a memory of a source mobile station, to a memory of a destination mobile station, and the source mobile station,
the memory mapping control apparatus comprising:
first receiving means for receiving source data stored in the memory of the source mobile station, from the source mobile station, for receiving source structure specifying information for specifying a memory allocation structure of the data of the source mobile station, from the source mobile station, and for receiving destination structure specifying information for specifying a memory allocation structure of the data of the destination mobile station, from the destination mobile station;
determining means for determining whether a memory allocation structure of the source data needs to be transformed, based on the source structure specifying information and the destination structure specifying information received by the first receiving means;
table acquiring means for, when the determining means determines that the memory allocation structure of the source data needs to be transformed, acquiring a memory allocation structure transformation table for writing the source data in accordance with the memory allocation structure of the destination mobile station, based on the source structure specifying information and the destination structure specifying information received by the first receiving means;
transmitting means for transmitting the memory allocation structure transformation tables acquired by the table acquiring means and the source data, to the destination mobile station,
the mobile station comprising:
a memory for storing data;
second receiving means for receiving the memory allocation structure transformation table and the source data from the memory mapping control apparatus; and
writing controlling means for transforming the source data received by the second receiving means, based on the memory allocation structure transformation table received by the second receiving means, and for writing the transformed source data into the memory.

7. A mobile station comprising:
a memory for storing data;
receiving means for receiving source data stored in a memory of a source mobile station, for receiving source structure specifying information for specifying a memory allocation structure of the data of the source mobile station;
determining means for determining whether a memory allocation structure of the source data needs to be transformed, based on the source structure specifying information received by the receiving means and memory structure specifying information for specifying a memory allocation structure of the memory;
table acquiring means for, when the determining means determines that the memory allocation structure of the source data needs to be transformed, acquiring a memory allocation structure transformation table for writing the source data in accordance with the memory allocation structure of the destination mobile station, based on the source structure specifying information and the destination structure specifying information received by the receiving means; and
writing controlling means for, when the determining means determines that the memory allocation structure of the source data needs to be transformed, transforming the source data received by the received means, based on the memory allocation structure transformation table acquired by the table acquiring means, and for writing the transformed source data into the memory, and for, when the determining means determines that the memory allocation structure of the source data does not need to be transformed, writing the received source data received by the receiving means into the memory as it is.

8. A data moving method in a memory mapping control apparatus for moving data stored in a memory of a source mobile station, to a memory of a destination mobile station, the data moving method comprising:
a receiving step of receiving source data stored in the memory of the source mobile station, from the source mobile station, receiving source structure specifying information for specifying a memory allocation structure of the data of the source mobile station, from the source mobile station, and receiving destination structure specifying information for specifying a memory allocation structure of the data of the destination mobile station, from the destination mobile station;
a determining step of determining whether a memory allocation structure of the source data needs to be transformed, based on the source structure specifying information and the destination structure specifying information received in the receiving step;
a table acquiring step of, when it is determined in the determining step that the memory allocation structure of the source data needs to be transformed, acquiring a data structure transformation table for writing the source data in accordance with the data structure of the destination mobile station, based on the source structure specifying information and the destination structure specifying information received in the receiving step;
data editing step of transforming the source data in accordance with the memory allocation structure transformation table acquired in the table acquiring step; and
a transmitting step of transmitting the transformed source data transformed in the data editing step, to the destination mobile station.

9. A data moving method in a destination mobile station in moving data stored in a memory of a source mobile station, to a memory of the destination mobile station, the data moving method comprising:
a receiving step of receiving source data stored in the memory of the source mobile station, and receiving source structure specifying information for a specifying memory allocation structure of the data of the source mobile station;
a determining step of determining whether a memory allocation structure of the source data needs to be transformed, based on the source structure specifying information received in the receiving step and destination structure specifying information for specifying a memory allocation structure of the destination mobile station;
a table acquiring step of, when it is determined in the determining step that the memory allocation structure of the source data needs to be transformed, acquiring a memory allocation structure transformation table for writing the source data in accordance with the memory allocation structure of the destination mobile station, based on the source structure specifying information and the memory structure specifying information received in the receiving step;
a first writing step of, when it is determined in the determining step that the memory allocation structure of the source data needs to be transformed, transforming the source data received in the receiving step, based on the memory allocation structure transformation table acquired in the table acquiring step, and of writing the transformed source data into the memory; and
a second writing step of, when it is determined in the determining step that the memory allocation structure of the source data does not need to be transformed, writing the received source data received in the receiving step into the memory as it is.

10. A data moving program for letting a memory mapping control apparatus, which is used for moving data stored in a memory of a source mobile station, to a memory of a destination mobile station, function as:
receiving means for receiving source data stored in the memory of the source mobile station, from the source mobile station, for receiving source structure specifying information for specifying a memory allocation structure of the data of the source mobile station, from the source mobile station, and for receiving destination structure specifying information for specifying a memory allocation structure of the data of the destination mobile station, from the destination mobile station;
determining means for determining whether a memory allocation structure of the source data needs to be transformed, based on the source structure specifying information and the destination structure specifying information received by the receiving means;
table acquiring means for, when the determining means determines that the memory allocation structure of the source data needs to be transformed, acquiring a memory allocation structure transformation table for writing the source data in accordance with the memory allocation structure of the destination mobile station, based on the source structure specifying information and the destination structure specifying information received by the receiving means;
data editing means for transforming the source data in accordance with the memory allocation structure transformation table acquired by the table acquiring means; and
transmitting means for transmitting the transformed source data by the data editing means, to the destination mobile station.

11. A data moving program in moving data stored in a memory of a source mobile station, to a memory of a destination mobile station, the data moving program letting the destination mobile station function as:
receiving means for receiving source data stored in the memory of the source mobile station, and for receiving source structure specifying information for specifying a memory allocation structure of the data of the source mobile station;
determining means for determining whether a memory allocation structure of the source data needs to be transformed, based on the source structure specifying information received by the receiving means and memory structure specifying information for specifying a memory allocation structure of the memory; and
table acquiring means for, when the determining means determines that the memory allocation structure of the source data needs to be transformed, acquiring a memory allocation structure transformation table for writing the source data in accordance with the memory allocation structure of the destination mobile station, based on the source structure specifying information and the memory structure specifying information received by the receiving means; and
writing controlling means for, when the determining means determines that the memory allocation structure of the source data needs to be transformed, transforming the source data received by the receiving means, based on the memory allocation structure transformation table acquired by the table acquiring means, and for writing the transformed source data into the memory, and for, when the determining means determines that the memory allocation structure of the source data does not need to be transformed, writing the received source data received by the receiving means into the memory as it is.

## Patentansprüche

1. Eine Speicher-Abbildung-Steuerungsvorrichtung, welche verwendet wird, um in einem Speicher einer Quellen-Mobilstation gespeicherte Daten zu einem Speicher einer Ziel-Mobilstation zu verschieben, wobei die Speicher-Abbildung-Steuerungsvorrichtung aufweist:
ein Empfangsmittel zum Empfangen von in dem Speicher der Quellen-Mobilstation gespeicherten Quellendaten von der Quellen-Mobilstation, zum Empfangen von Quellenstruktur-Spezifizierungsinformationen zum Spezifizieren einer Speicherzuordnungsstruktur der Daten der Quellen-Mobilstation von der Quellen-Mobilstation, und zum Empfangen von Zielstruktur-Spezifizierungsinformationen zum Spezifizieren einer Speicherzuordnungsstruktur der Daten der Ziel-Mobilstation von der Ziel-Mobilstation,
ein Ermittlungsmittel zum Ermitteln, ob eine Speicherzuordnungsstruktur der Quellendaten umgewandelt werden muss, basierend auf den Quellenstruktur-Spezifizierungsinformationen und den Zielstruktur-Spezifizierungsinformationen, die von dem Empfangsmittel empfangen werden,
ein Tabelle-Erlangungsmittel zum Erlangen, wenn das Ermittlungsmittel ermittelt, dass die Speicherzuordnungsstruktur der Quellendaten umgewandelt werden muss, einer Speicherzuordnungsstruktur-Umwandlungstabelle zum Schreiben der Quellendaten gemäß der Speicherzuordnungsstruktur der Ziel-Mobilstation, basierend auf den Quellenstruktur-Spezifizierungsinformationen und den Zielstruktur-Spezifizierungsinformationen, die von dem Empfangsmittel empfangen werden,
ein Daten-Editiermittel zum Umwandeln der Quellendaten gemäß der Speicherzuordnungsstruktur-Umwandlungstabelle, die durch das Tabelle-Erlangungsmittel erlangt wird, und
ein Übertragungsmittel zum Übertragen der durch das Daten-Editiermittel umgewandelten Quellendaten an die Ziel-Mobilstation.

2. Die Speicher-Abbildung-Steuerungsvorrichtung gemäß Anspruch 1,
wobei das Tabelle-Erlangungsmittel die Speicherzuordnungsstruktur-Umwandlungstabelle basierend auf den Quellenstruktur-Spezifizierungsinformationen und den Zielstruktur-Spezifizierungsinformationen präpariert und dadurch die Speicherzuordnungsstruktur-Umwandlungstabelle erlangt.

3. Die Speicher-Abbildung-Steuerungsvorrichtung gemäß Anspruch 1 oder 2,
wobei die Quellenstruktur-Spezifizierungsinformationen Versionsinformationen von Hardware in der Quellen-Mobilstation enthalten,
wobei die Zielstruktur-Spezifizierungsinformationen Versionsinformationen von Hardware in der Ziel-Mobilstation aufweisen,
wobei das Ermittlungsmittel ermittelt, dass die Speicherzuordnungsstruktur der Quellendaten umgewandelt werden muss basierend auf den in den Quellenstruktur-Spezifizierungsinformationen enthaltenen Versionsinformationen und auf den in den Zielstruktur-Spezifizierungsinformationen enthaltenen Versionsinformationen, die von dem Empfangsmittel empfangen werden, und
wobei das Tabelle-Erlangungsmittel, wenn das Ermittlungsmittel ermittelt, dass die Speicherzuordnungsstruktur der Quellendaten umgewandelt werden muss, die Speicherzuordnungsstruktur-Umwandlungstabelle erlangt basierend auf den in den Quellenstruktur-Spezifizierungsinformationen enthaltenen Versionsinformationen und auf den in den Zielstruktur-Spezifizierungsinformationen enthaltenen Versionsinformationen, die von dem Empfangsmittel empfangen werden.

4. Die Speicher-Abbildung-Steuerungsvorrichtung gemäß Anspruch 3,
wobei die Quellenstruktur-Spezifizierungsinformationen ferner Bereichsinformationen enthalten, die Informationen zum Spezifizieren von zu verschiebenden Datenspeicherbereichen sind, und
wobei das Tabelle-Erlangungsmittel, wenn das Ermittlungsmittel ermittelt, dass die Speicherzuordnungsstruktur der Quellendaten umgewandelt werden muss, Speicher-Abbildung-Informationen der Quellen-Mobilstation und der Ziel-Mobilstation erlangt, die Informationen sind, die anzeigen, welcher Speicherbereich welche internen Mobilstationsdaten speichert, basierend auf den in den Quellenstruktur-Spezifizierungsinformationen enthaltenen Versionsinformationen und auf den in den Zielstruktur-Spezifizierungsinformationen enthaltenen Versionsinformationen, die von dem Empfangsmittel empfangen werden, und dadurch die Speicherzuordnungsstruktur-Umwandlungstabelle erlangt.

5. Die Speicher-Abbildung-Steuerungsvorrichtung gemäß Anspruch 3,
wobei die Quellenstruktur-Spezifizierungsinformationen ferner Speicher-Abbildung-Informationen enthalten, die Informationen sind, die anzeigen, welcher Speicherbereich welche internen Mobilstationsdaten speichert, und Bereichsinformationen, die Informationen zum Spezifizieren von zu verschiebenden Datenspeicherbereichen sind,
wobei die Zielstruktur-Spezifizierungsinformationen ferner Speicher-Abbildung-Informationen enthalten, und
wobei das Tabelle-Erlangungsmittel, wenn das Ermittlungsmittel ermittelt, dass die Speicherzuordnungsstruktur der Quellendaten umgewandelt werden muss, die Speicherzuordnungsstruktur-Umwandlungstabelle präpariert basierend auf den Speicher-Abbildung-Informationen und den Bereichsinformationen, die in den Quellenstruktur-Spezifizierungsinformationen enthalten sind, und den Speicher-Abbildung-Informationen, die in den Zielstruktur-Spezifizierungsinformationen enthalten sind, die von dem Empfangsmittel empfangen werden, und dadurch die Speicherzuordnungsstruktur-Umwandlungstabelle erlangt.

6. Ein Kommunikationssystem, welches eine Speicher-Abbildung-Steuerungsvorrichtung, die zum Verschieben von in einem Speicher einer Quellen-Mobilstation gespeicherten Daten zu einem Speicher einer Ziel-Mobilstation verwendet wird, und die Quellen-Mobilstation enthält,
wobei die Speicher-Abbildung-Steuerungsvorrichtung aufweist:
ein erstes Empfangsmittel zum Empfangen von in dem Speicher der Quellen-Mobilstation gespeicherten Quellendaten von der Quellen-Mobilstation, zum Empfangen von Quellenstruktur-Spezifizierungsinformationen zum Spezifizieren einer Speicherzuordnungsstruktur der Daten der Quellen-Mobilstation von der Quellen-Mobilstation, und zum Empfangen von Zielstruktur-Spezifizierungsinformationen zum Spezifizieren einer Speicherzuordnungsstruktur der Daten der Ziel-Mobilstation von der Ziel-Mobilstation,
ein Ermittlungsmittel zum Ermitteln, ob eine Speicherzuordnungsstruktur der Quellendaten umgewandelt werden muss, basierend auf den Quellenstruktur-Spezifizierungsinformationen und den Zielstruktur-Spezifizierungsinformationen, die von dem Empfangsmittel empfangen werden,
ein Tabelle-Erlangungsmittel zum Erlangen, wenn das Ermittlungsmittel ermittelt, dass die Speicherzuordnungsstruktur der Quellendaten umgewandelt werden muss, einer Speicherzuordnungsstruktur-Umwandlungstabelle zum Schreiben der Quellendaten gemäß der Speicherzuordnungsstruktur der Ziel-Mobilstation, basierend auf den Quellenstruktur-Spezifizierungsinformationen und den Zielstruktur-Spezifizierungsinformationen, die von dem ersten Empfangsmittel empfangen werden,
ein Übertragungsmittel zum Übertragen der Speicherzuordnungsstruktur-Umwandlungstabellen, die von dem Tabelle-Erlangungsmittel erlangt wurden, und der Quellendaten an die Ziel-Mobilstation,
wobei die Mobilstation aufweist:
einen Speicher zum Speichern von Daten,
ein zweites Empfangsmittel zum Empfangen der Speicherzuordnungsstruktur-Umwandlungstabelle und der Quellendaten von der Speicher-Abbildung-Steuerungsvorrichtung, und
ein Schreib-Steuerungsmittel zum Umwandeln der von dem zweiten Empfangsmittel empfangenen Quellendaten basierend auf der von dem zweiten Empfangsmittel empfangenen Speicherzuordnungsstruktur-Umwandlungstabelle, und zum Schreiben der umgewandelten Quellendaten in den Speicher.

7. Eine Mobilstation aufweisend:
einen Speicher zum Speichern von Daten,
ein Empfangsmittel zum Empfangen von in einem Speicher einer Quellen-Mobilstation gespeicherten Quellendaten, zum Empfangen von Quellenstruktur-Spezifizierungsinformationen zum Spezifizieren einer Speicherzuordnungsstruktur der Daten der Quellen-Mobilstation,
ein Ermittlungsmittel zum Ermitteln, ob eine Speicherzuordnungsstruktur der Quellendaten umgewandelt werden muss, basierend auf den Quellenstruktur-Spezifizierungsinformationen, die von dem Empfangsmittel empfangen werden und Speicherstruktur-Spezifizierungsinformationen zum Spezifizieren einer Speicherzuordnungsstruktur des Speichers,
ein Tabelle-Erlangungsmittel zum Erlangen, wenn das Ermittlungsmittel ermittelt, dass die Speicherzuordnungsstruktur der Quellendaten umgewandelt werden muss, einer Speicherzuordnungsstruktur-Umwandlungstabelle zum Schreiben der Quellendaten gemäß der Speicherzuordnungsstruktur der Ziel-Mobilstation, basierend auf den Quellenstruktur-Spezifizierungsinformationen und den Zielstruktur-Spezifizierungsinformationen, die von dem Empfangsmittel empfangen werden, und
ein Schreib-Steuerungsmittel zum Umwandeln, wenn das Ermittlungsmittel ermittelt, dass die Speicherzuordnungsstruktur der Quellendaten umgewandelt werden muss, der von dem Empfangsmittel empfangenen Quellendaten basierend auf der von dem Tabelle-Erlangungsmittel erlangten Speicherzuordnungsstruktur-Umwandlungstabelle, und zum Schreiben der umgewandelten Quellendaten in den Speicher, und zum Schreiben, wenn das Ermittlungsmittel ermittelt, dass die Speicherzuordnungsstruktur der Quellendaten nicht umgewandelt werden muss, der von dem Empfangsmittel empfangenen Quellendaten in den Speicher, so wie sie sind.

8. Ein Datenverschiebeverfahren in einer Speicher-Abbildung-Steuerungsvorrichtung zum Verschieben von Daten, die in einem Speicher einer Quellen-Mobilstation gespeichert sind, zu einem Speicher einer Ziel-Mobilstation, wobei das Datenverschiebeverfahren aufweist:
einen Empfangsschritt des Empfangens von Quelldaten, die in dem Speicher der Quellen-Mobilstation gespeichert sind, von der Quellen-Mobilstation, des Empfangens von Quellenstruktur-Spezifizierungsinformationen zum Spezifizieren einer Speicherzuordnungsstruktur der Daten der Quellen-Mobilstation, von der Quellen-Mobilstation, und des Empfangens von Zielstruktur-Spezifizierungsinformationen zum Spezifizieren einer Speicherzuordnungsstruktur der Daten der Ziel-Mobilstation, von der Ziel-Mobilstation,
einen Ermittlungsschritt des Ermittelns, ob eine Speicherzuordnungsstruktur der Quellendaten umgewandelt werden muss, basierend auf den in dem Empfangsschritt empfangenen Quellenstruktur-Spezifizierungsinformationen und den Zielstruktur-Spezifizierungsinformationen,
einen Tabelle-Erlangungsschritt des Erlangens, wenn in dem Ermittlungsschritt ermittelt wird, dass die Speicherzuordnungsstruktur der Quellendaten umgewandelt werden muss, einer Speicherzuordnungsstruktur-Umwandlungstabelle zum Schreiben der Quellendaten gemäß der Datenstruktur der Ziel-Mobilstation basierend auf den in dem Empfangsschritt empfangenen Quellenstruktur-Spezifizierungsinformationen und den Zielstruktur-Spezifizierungsinformationen,
einen Daten-Editierschritt des Umwandelns der Quellendaten gemäß der Speicherzuordnungsstruktur-Umwandlungstabelle, die in dem Tabelle-Erlangungsschritt erlangt wurde, und
einen Übertragungsschritt des Übertragens der in dem Daten-Editierschritt umgewandelten Quellendaten an die Ziel-Mobilstation.

9. Ein Datenverschiebeverfahren in einer Ziel-Mobilstation zum Verschieben von in einem Speicher einer Quellen-Mobilstation gespeicherten Daten zu einem Speicher einer Ziel-Mobilstation, wobei das Datenverschiebeverfahren aufweist:
einen Empfangsschritt des Empfangens von Quellendaten, die in dem Speicher der Quellen-Mobilstation gespeichert sind, und des Empfangens von Quellenstruktur-Spezifizierungsinformationen zum Spezifizieren einer Speicherzuordnungsstruktur der Daten der Quellen-Mobilstation,
einen Ermittlungsschritt des Ermittelns, ob eine Speicherzuordnungsstruktur der Quellendaten umgewandelt werden muss, basierend auf den in dem Empfangsschritt empfangenen Quellenstruktur-Spezifizierungsinformationen und den Zielstruktur-Spezifizierungsinformationen zum Spezifizieren einer Speicherzuordnungsstruktur der Ziel-Mobilstation,
einen Tabelle-Erlangungsschritt des Erlangens, wenn in dem Ermittlungsschritt ermittelt wird, dass die Speicherzuordnungsstruktur der Quellendaten umgewandelt werden muss, einer Speicherzuordnungsstruktur-Umwandlungstabelle zum Schreiben der Quellendaten gemäß der Speicherzuordnungsstruktur der Ziel-Mobilstation basierend auf den Quellenstruktur-Spezifizierungsinformationen und den Speicherstruktur-Spezifizierungsinformationen, die in dem Empfangsschritt empfangen werden,
einen ersten Schreibschritt des Umwandelns, wenn in dem Ermittlungsschritt ermittelt wird, dass die Speicherzuordnungsstruktur der Quellendaten umgewandelt werden muss, der in dem Empfangsschritt empfangenen Quellendaten basierend auf der in dem Tabelle-Erlangungsschritt erlangten Speicherzuordnungsstruktur-Umwandlungstabelle, und des Schreibens der umgewandelten Quellendaten in den Speicher, und
einen zweiten Schreibschritt des Schreibens, wenn in dem Ermittlungsschritt ermittelt wird, dass die Speicherzuordnungsstruktur der Quellendaten nicht umgewandelt werden muss, der in dem Empfangsschritt empfangenen Quellendaten in den Speicher, so wie sie sind.

10. Ein Datenverschiebeprogramm, bei dem eine Speicher-Abbildung-Steuerungsvorrichtung, welche zum Verschieben von in einem Speicher einer Quellen-Mobilstation gespeicherten Daten zu einem Speicher einer Ziel-Mobilstation verwendet wird, funktioniert als:
ein Empfangsmittel zum Empfangen von in dem Speicher der Quellen-Mobilstation gespeicherten Quellendaten von der Quellen-Mobilstation, zum Empfangen von Quellenstruktur-Spezifizierungsinformationen zum Spezifizieren einer Speicherzuordnungsstruktur der Daten der Quellen-Mobilstation von der Quellen-Mobilstation, und zum Empfangen von Zielstruktur-Spezifizierungsinformationen zum Spezifizieren einer Speicherzuordnungsstruktur der Daten der Ziel-Mobilstation von der Ziel-Mobilstation,
ein Ermittlungsmittel zum Ermitteln, ob eine Speicherzuordnungsstruktur der Quellendaten umgewandelt werden muss, basierend auf den Quellenstruktur-Spezifizierungsinformationen und den Zielstruktur-Spezifizierungsinformationen, die von dem Empfangsmittel empfangen werden,
ein Tabelle-Erlangungsmittel zum Erlangen, wenn das Ermittlungsmittel ermittelt, dass die Speicherzuordnungsstruktur der Quellendaten umgewandelt werden muss, einer Speicherzuordnungsstruktur-Umwandlungstabelle zum Schreiben der Quellendaten gemäß Speicherzuordnungsstruktur der Ziel-Mobilstation, basierend auf den Quellenstruktur-Spezifizierungsinformationen und den Zielstruktur-Spezifizierungsinformationen, die von dem Empfangsmittel empfangen werden,
ein Daten-Editiermittel zum Umwandeln der Quellendaten gemäß der Speicherzuordnungsstruktur-Umwandlungstabelle, die durch das Tabelle-Erlangungsmittel erlangt wurde, und
ein Übertragungsmittel zum Übertragen der durch das Daten-Editiermittel umgewandelten Quellendaten an die Ziel-Mobilstation.

11. Ein Datenverschiebeprogramm des Verschiebens von in einem Speicher einer Quelle-Mobilstation gespeicherten Daten zu einem Speicher einer Ziel-Mobilstation, wobei das Datenverschiebeprogramm die Ziel-Mobilstation funktionieren lässt als:
ein Empfangsmittel zum Empfangen von in dem Speicher der Quellen-Mobilstation gespeicherten Quellendaten und zum Empfangen von Quellenstruktur-Spezifizierungsinformationen zum Spezifizieren einer Speicherzuordnungsstruktur der Daten der Quellen-Mobilstation,
ein Ermittlungsmittel zum Ermitteln, ob eine Speicherzuordnungsstruktur der Quellendaten umgewandelt werden muss, basierend auf den Quellenstruktur-Spezifizierungsinformationen, die von dem Empfangsmittel empfangen werden und Speicherstruktur-Spezifizierungsinformationen zum Spezifizieren einer Speicherzuordnungsstruktur des Speichers,
ein Tabelle-Erlangungsmittel zum Erlangen, wenn das Ermittlungsmittel ermittelt, dass die Speicherzuordnungsstruktur der Quellendaten umgewandelt werden muss, einer Speicherzuordnungsstruktur-Umwandlungstabelle zum Schreiben der Quellendaten gemäß der Speicherzuordnungsstruktur der Ziel-Mobilstation, basierend auf den Quellenstruktur-Spezifizierungsinformationen und den Speicherstruktur-Spezifizierungsinformationen, die von dem Empfangsmittel empfangen werden, und
ein Schreib-Steuerungsmittel zum Umwandeln, wenn das Ermittlungsmittel ermittelt, dass die Speicherzuordnungsstruktur der Quellendaten umgewandelt werden muss, der von dem Empfangsmittel empfangenen Quellendaten basierend auf der von dem Tabelle-Erlangungsmittel erlangten Speicherzuordnungsstruktur-Umwandlungstabelle, und zum Schreiben der umgewandelten Quellendaten in den Speicher, und zum Schreiben, wenn das Ermittlungsmittel ermittelt, dass die Speicherzuordnungsstruktur der Quellendaten nicht umgewandelt werden muss, der von dem Empfangsmittel empfangenen Quellendaten in den Speicher, so wie sie sind.

## Revendications

1. Appareil de commande de mise en correspondance de mémoires utilisé pour déplacer des données stockées dans la mémoire d'une station mobile de source, vers une mémoire d'une station mobile de destination, l'appareil de commande de mise en correspondance de mémoires comportant :
un moyen de réception pour recevoir des données de source stockées dans la mémoire de la station mobile de source, en provenance de la station mobile de source, pour recevoir des informations de spécification de structure de source destinées à spécifier une structure d'allocation de mémoire des données de la station mobile de source, en provenance de la station mobile de source, et pour recevoir des informations de spécification de structure de destination destinées à spécifier une structure d'allocation de mémoire des données de la station mobile de destination, en provenance de la station mobile de destination ;
un moyen de détermination pour déterminer si une structure d'allocation de mémoire des données de source nécessite d'être transformée, sur la base des informations de spécification de structure de source et des informations de spécification de structure de destination reçues par le moyen de réception ;
un moyen d'acquisition de table pour, lorsque le moyen de détermination détermine que la structure d'allocation de mémoire des données de source nécessite d'être transformée, acquérir une table de transformation de structure d'allocation de mémoire pour écrire les données de source selon la structure d'allocation de mémoire de la station mobile de destination, sur la base des informations de spécification de structure de source et des informations de spécification de structure de destination reçues par le moyen de réception ;
un moyen de modification des données pour transformer les données de source selon la table de transformation de structure d'allocation de mémoire acquise par le moyen d'acquisition de table ; et
un moyen de transmission pour transmettre les données de source transformées par le moyen de modification des données à la station mobile de destination.

2. Appareil de commande de mise en correspondance de mémoires selon la revendication 1,
dans lequel le moyen d'acquisition de table prépare la table de transformation de structure d'allocation de mémoire sur la base des informations de spécification de structure de source et des informations de spécification de structure de destination, ce qui permet ainsi d'acquérir la table de transformation de structure d'allocation de mémoire.

3. Appareil de commande de mise en correspondance de mémoires selon la revendication 1 ou 2,
dans lequel les informations de spécification de structure de source contiennent des informations de version de matériel dans la station mobile de source ;
dans lequel les informations de spécification de structure de destination incluent des informations de version de matériel dans la station mobile de destination ;
dans lequel le moyen de détermination détermine que la structure d'allocation de mémoire des données de source nécessite d'être transformée, sur la base des informations de version contenues dans les informations de spécification de structure de source et des informations de version contenues dans les informations de spécification de structure de destination reçues par le moyen de réception ; et
dans lequel le moyen d'acquisition de table, lorsque le moyen de détermination détermine que la structure d'allocation de mémoire des données de source nécessite d'être transformée, acquiert la table de transformation de structure d'allocation de mémoire, sur la base des informations de version contenues dans les informations de spécification de structure de source et des informations de version contenues dans les informations de spécification de structure de destination reçues par le moyen de réception.

4. Appareil de commande de mise en correspondance de mémoires selon la revendication 3,
dans lequel les informations de spécification de structure de source contiennent en outre des informations de zones qui correspondent à des informations destinées à spécifier des zones de mémoire de données à déplacer ; et
dans lequel le moyen d'acquisition de table, lorsque le moyen de détermination détermine que la structure d'allocation de mémoire des données de source nécessite d'être transformée, acquiert des informations de mise en correspondance de mémoires de la station mobile de source et de la station mobile de destination, qui correspondent à des informations indiquant quelle zone de mémoire stocke quelles données internes de la station mobile, sur la base des informations de version contenues dans les informations de spécification de structure de source et des informations de version contenues dans les informations de spécification de structure de destination reçues par le moyen de réception, et acquiert par conséquent la table de transformation de la structure d'allocation de mémoire.

5. Appareil de commande de mise en correspondance de mémoires selon la revendication 3,
dans lequel les informations de spécification de structure de source contiennent en outre des informations de mise en correspondance de mémoires qui correspondent à des informations indiquant quelle zone de mémoire stocke quelles données internes de la station mobile, et des informations de zones qui correspondent à des informations destinées à spécifier des zones de mémoire des données à déplacer,
dans lequel les informations de spécification de structure de destination contiennent en outre des informations de mise en correspondance de mémoires, et
dans lequel le moyen d'acquisition de table, lorsque le moyen de détermination détermine que la structure d'allocation de mémoire des données de source nécessite d'être transformée, prépare la table de transformation des structures d'allocation de mémoire sur la base des informations de mise en correspondance de mémoires et des informations de zones contenues dans les informations de spécification des structure de source, et des informations de mise en correspondance de mémoires contenues dans les informations de spécification des structures de destination, reçues par le moyen de réception, et acquiert par conséquent la table de transformation de structure d'allocation de mémoire.

6. Système de communication constitué d'un appareil de commande de mise en correspondance de mémoires utilisé pour déplacer des données stockées dans une mémoire d'une station mobile de source, vers une mémoire d'une station mobile de destination, et de la station mobile de source,
l'appareil de commande de mise en correspondance de mémoires comportant :
un premier moyen de réception pour recevoir des données de source stockées dans la mémoire de la station mobile de source, en provenance de la station mobile de source, pour recevoir des informations de spécification de structure de source destinées à spécifier une structure d'allocation de mémoire des données de la station mobile de source, en provenance de la station mobile de source, et pour recevoir des informations de spécification de structure de destination destinées à spécifier une structure d'allocation de mémoire des données de la station mobile de destination, en provenance de la station mobile de destination ;
un moyen de détermination pour déterminer si une structure d'allocation de mémoire des données de source nécessite d'être transformée, sur la base des informations de spécification de structure de source et des informations de spécification de structure de destination reçues par le premier un moyen de réception ;
un moyen d'acquisition de table pour, lorsque le moyen de détermination détermine que la structure d'allocation de mémoire des données de source nécessite d'être transformée, acquérir une table de transformation de structure d'allocation de mémoire pour écrire les données de source selon la structure d'allocation de mémoire de la station mobile de destination, sur la base des informations de spécification de structure de source et des informations de spécification de structure de destination reçues par le premier un moyen de réception ;
un moyen de transmission pour transmettre les tables de transformation de structure d'allocation de mémoire acquises par le moyen d'acquisition de table et les données de source, à la station mobile de destination ;
la station mobile comportant :
une mémoire destinée à stocker des données ;
un second un moyen de réception pour recevoir la table de transformation de structure d'allocation de mémoire et les données de source en provenance de l'appareil de commande de mise en correspondance de mémoires ; et
un moyen de commande d'écriture pour transformer les données de source reçues par le second un moyen de réception, sur la base de la table de transformation de la structure d'allocation de mémoire reçue par le second moyen de réception, et pour écrire les données de source transformées dans la mémoire.

7. La station mobile comportant :
une mémoire destinée à stocker des données ;
un moyen de réception pour recevoir des données de source stockées dans une mémoire d'une station mobile de source, pour recevoir des informations de spécification de structure de source destinées à spécifier une structure d'allocation de mémoire des données de la station mobile de source ;
un moyen de détermination pour déterminer si une structure d'allocation de mémoire des données de source nécessite d'être transformée, sur la base des informations de spécification de structure de source reçues par le moyen de réception et des informations de spécification de structure de mémoire destinées à spécifier une structure d'allocation de mémoire de la mémoire ;
un moyen d'acquisition de table pour, lorsque le moyen de détermination détermine que la structure d'allocation de mémoire des données de source nécessite d'être transformée, acquérir une table de transformation des structures d'allocation de mémoire pour écrire les données de source selon la structure d'allocation de mémoire de la station mobile de destination, sur la base des informations de spécification de structure de source et des informations de spécification de structure de destination reçues par le moyen de réception ; et
un moyen de commande d'écriture pour, lorsque le moyen de détermination détermine que la structure d'allocation de mémoire des données de source nécessite d'être transformée, transformer les données de source reçues par le moyen de réception, sur la base de la table de transformation des structures d'allocation de mémoire acquise par le moyen d'acquisition de table, et pour écrire les données de source transformées dans la mémoire, et pour, lorsque le moyen de détermination détermine que la structure d'allocation de mémoire des données de source ne nécessite pas d'être transformée, écrire les données de source reçues, lesquelles sont reçues par le moyen de réception, dans la mémoire, en l'état.

8. Procédé de déplacement de données dans un appareil de commande de mise en correspondance de mémoires pour déplacer des données stockées dans une mémoire d'une station mobile de source, vers une mémoire d'une station mobile de destination, le procédé de déplacement de données comportant :
une étape de réception consistant à recevoir des données de source stockées dans la mémoire de la station mobile de source, en provenance de la station mobile de source, recevoir des informations de spécification de structure de source destinées à spécifier une structure d'allocation de mémoire des données de la station mobile de source, en provenance de la station mobile de source, et recevoir des informations de spécification de structure de destination destinées à spécifier une structure d'allocation de mémoire des données de la station mobile de destination, en provenance de la station mobile de destination ;
une étape de détermination consistant à déterminer si une structure d'allocation de mémoire des données de source nécessite d'être transformée, sur la base des informations de spécification de structure de source et des informations de spécification de structure de destination reçues à l'étape de réception ;
une étape d'acquisition de table consistant à, lorsqu'il est déterminé, à l'étape de détermination, que la structure d'allocation de mémoire des données de source nécessite d'être transformée, acquérir une table de transformation de structure de données pour écrire les données de source selon la structure de données de la station mobile de destination, sur la base des informations de spécification de structure de source et des informations de spécification de structure de destination reçues à l'étape de réception ;
une étape de modification de données consistant à transformer les données de source selon la table de transformation des structures d'allocation de mémoire acquise à l'étape d'acquisition de table ; et
une étape de transmission consistant à transmettre les données de source transformées, lesquelles sont transformées à l'étape de modification de données, à la station mobile de destination.

9. Procédé de déplacement de données dans une station mobile de destination, dans le cadre d'un déplacement de données stockées dans une mémoire d'une station mobile de source, vers une mémoire de la station mobile de destination, le procédé de déplacement de données comportant :
une étape de réception consistant à recevoir des données de source stockées dans la mémoire de la station mobile de source, et à recevoir des informations de spécification de structure de source destinées à spécifier une structure d'allocation de mémoire des données de la station mobile de source ;
une étape de détermination consistant à déterminer si une structure d'allocation de mémoire des données de source nécessite d'être transformée, sur la base des informations de spécification de structure de source reçues à l'étape de réception et des informations de spécification de structure de destination destinées à spécifier une structure d'allocation de mémoire de la station mobile de destination ;
une étape d'acquisition de table consistant à, lorsqu'il est déterminé, à l'étape de détermination, que la structure d'allocation de mémoire des données de source nécessite d'être transformée, acquérir une table de transformation de structure d'allocation de mémoire pour écrire les données de source selon la structure d'allocation de mémoire de la station mobile de destination, sur la base des informations de spécification de structure de source et des informations de spécification de structure de mémoire reçues à l'étape de réception ;
une première étape d'écriture consistant à, lorsqu'il est déterminé, à l'étape de détermination, que la structure d'allocation de mémoire des données de source nécessite d'être transformée, transformer les données de source reçues à l'étape de réception, sur la base de la table de transformation de structure d'allocation de mémoire acquise à l'étape d'acquisition de table, et consistant à écrire les données de source transformées dans la mémoire ; et
une seconde étape d'écriture consistant à, lorsqu'il est déterminé, à l'étape de détermination, que la structure d'allocation de mémoire des données de source ne nécessite pas d'être transformée, écrire les données de source reçues, lesquelles sont reçues à l'étape de réception, dans la mémoire, en l'état.

10. Programme de déplacement des données destiné à amener un appareil de commande de mise en correspondance de mémoires, lequel est utilisé pour déplacer des données stockées dans une mémoire d'une station mobile de source, vers une mémoire d'une station mobile de destination, à fonctionner en tant que :
moyen de réception pour recevoir des données de source stockées dans la mémoire de la station mobile de source, en provenance de la station mobile de source, pour recevoir des informations de spécification de structure de source destinées à spécifier une structure d'allocation de mémoire des données de la station mobile de source, en provenance de la station mobile de source, et pour recevoir des informations de spécification de structure de destination destinées à spécifier une structure d'allocation de mémoire des données de la station mobile de destination, en provenance de la station mobile de destination ;
un moyen de détermination pour déterminer si une structure d'allocation de la mémoire des données de source nécessite d'être transformée, sur la base des informations de spécification de structure de source et des informations de spécification des structures de destination reçues par le moyen de réception ;
un moyen d'acquisition de table pour, lorsque le moyen de détermination détermine que la structure d'allocation de mémoire des données de source nécessite d'être transformée, acquérir une table de transformation de structure d'allocation de mémoire pour écrire les données de source selon la structure d'allocation de mémoire de la station mobile de destination, sur la base des informations de spécification de structure de source et des informations de spécification de structure de destination reçues par le moyen de réception ;
un moyen de modification des données pour transformer les données de source selon la table de transformation de structure d'allocation de mémoire acquise par le moyen d'acquisition de table ; et
un moyen de transmission pour transmettre les données de source transformées par le moyen de modification des données, à la station mobile de destination.

11. Programme de déplacement des données dans le cadre d'un déplacement de données stockées dans une mémoire d'une station mobile de source, vers une mémoire d'une station mobile de destination, le programme de déplacement de données amenant la station mobile de destination à fonctionner en tant que :
un moyen de réception pour recevoir des données de source stockées dans la mémoire de la station mobile de source, et pour recevoir des informations de spécification de structure de source destinées à spécifier une structure d'allocation de mémoire des données de la station mobile de source ;
un moyen de détermination pour déterminer si une structure d'allocation de mémoire des données de source nécessite d'être transformée, sur la base des informations de spécification de structure de source reçues par le moyen de réception et des informations de spécification de structure de mémoire destinées à spécifier une structure d'allocation de mémoire de la mémoire ; et
un moyen d'acquisition de table pour, lorsque le moyen de détermination détermine que la structure d'allocation de mémoire des données de source nécessite d'être transformée, acquérir une table de transformation de la structure d'allocation de mémoire pour écrire les données de source selon la structure d'allocation de mémoire de la station mobile de destination, sur la base des informations de spécification de structure de source et des informations de spécification de structure de mémoire reçues par le moyen de réception ; et
un moyen de commande d'écriture pour, lorsque le moyen de détermination détermine que la structure d'allocation de mémoire des données de source nécessite d'être transformée, transformer les données de source reçues par le moyen de réception, sur la base de la table de transformation de la structure d'allocation de mémoire acquise par le moyen d'acquisition de table, et pour écrire les données de source transformées dans la mémoire, et pour, lorsque le moyen de détermination détermine que la structure d'allocation de mémoire des données de source ne nécessite pas d'être transformée, écrire les données de source reçues, lesquelles sont reçues par le moyen de réception, dans la mémoire, en l'état.
